# EUROPEAN PATENT SPECIFICATION

(11) **EP 0 406 823 B1**
(45) Date of publication and mention of the grant of the patent: **22.10.1997**
(21) Application number: 90112759.7
(22) Date of filing: 04.07.1990
(51) Int. Cl.: G11B 11/10, G11B 7/24, B32B 15/20

(54) **Magnetooptical recording media**
Magnetooptische Aufzeichnungsmedien
Milieux d'enregistrement magnéto-optique

(30) Priority: 05.07.1989 JP 173793/89; 12.06.1990 JP 153560/90; 27.06.1990 JP 168765/90
(43) Date of publication of application: 09.01.1991
(73) Proprietor: MITSUI PETROCHEMICAL INDUSTRIES, LTD., Tokyo 100 (JP)
(72) Inventor: Shindo, Kiyotaka, c/o Mitsui Petrochem. Ind.Ltd., Sodegaura-cho, Kimitsu-gun, Chiba 299-02 (JP); Hashimoto, Hidehiko, c/o Mitsui Petrochem.Ind.Ltd., Sodegaura-cho, Kimitsu-gun, Chiba 299-02 (JP); Mizumoto, Kunihiko, c/o Mitsui Petrochem.Ind.Ltd., Sodegaura-cho, Kimitsu-gun, Chiba 299-02 (JP); Kurisu, Masayoshi, c/o Mitsui Petrochem.Ind.Ltd., Sodegaura-cho, Kimitsu-gun, Chiba 299-02 (JP); Todo, Akira, c/o Mitsui Petrochem. Ind.Ltd., Sodegaura-cho, Kimitsu-gun, Chiba 299-02 (JP)
(74) Representative: Hansen, Bernd, Dr. Dipl.-Chem.

(56) References cited:
- EP-A- 331 737
- EP-A- 0 293 797
- EP-A- 0 320 286
- EP-A- 0 366 369
- EP-A- 0 369 610
- WO-A-89/01687

## Description

### FIELD OF THE INVENTION

This invention relates to magnetooptical recording media with excellent oxidation resistance and magnetooptical recording characteristics, and more particularly to magnetooptical recording media with excellent oxidation resistance and also with such excellent magnetooptical recording characteristics as broad recording power margin, small dependence on linear velocity of recording sensitivity and high C/N ratio and, moreover, with excellent adhesion between a substrate and a protective film.

### BACKGROUND OF THE INVENTION

It is well known that magnetooptical recording films composed of alloys comprising transition metals, such as iron and cobalt, and rare earth elements, such as terbium (Tb) and gadolinium (Gd), have a magnetic easy axis perpendicular to the film and are capable of forming a small reversed magnetic domain with magnetization anti-parallel to the magnetization of the film. By corresponding to the existence or nonexistence of this reversed magnetic domain to "1" or "0", it becomes possible to record a digital signal in such magnetooptical recording film as mentioned above.

As the magnetooptical recording films of this kind composed of transition metals and rare earth elements, there are disclosed Tb-Fe magnetooptical recording films containing 15-30 atom% of Tb. There are used also magnetooptical recording films of Tb-Fe system to which a third metal component has been added. Also known are magnetooptical recording films of Tb-Co or Tb-Fe-Co system.

Various attempts have been made to improve oxidation resistance of such magnetooptical recording films of Tb-Fe, Tb-Co or the like systems by incorporation into these films of a third metal component.

Magnetooptical recording media having a substrate and thereon such magnetooptical recording films as mentioned above are generally lacking in oxidation resistance, and they have been required also to have improved recording sensitivity.

In writing information in magnetooptical recording media mentioned above, it is a universal desire that in the media, recording power margin is broad and dependence of recording sensitivity on linear velocity is small. As used herein, the expression that the recording power margin is broad at the time of writing information in the magnetooptical recording medium by the use as a writing ray of light of a laser beam or the like is intended to mean that the information can be written accurately in the medium even when a power of the laser beam used varies more or less, and that the dependence on linear velocity of recording sensitivity is intended to mean that at the time of writing information in the medium by the use as a writing ray of light of a laser beam of the like, variation in the optimum recording power of the laser beam is small even when the rotational speed of the portion of the medium in which the information is written varies.

Furthermore, in magnetooptical recording media having a substrate and a magnetooptical recording film interposed between the substrate and a protective film, it is desired that adhesion between the substrate and the protective film is excellent.

In light of the foregoing, it is desired that such magnetooptical recording media as having excellent oxidation resistance, high C/N ratio, broad recording power margin, small dependence on linear velocity of recording sensitivity and excellent adhesion between the substrate and protective film will make their appearance.

Extensive researches carried out by the present inventors with the view of obtaining such magnetooptical recording media as mentioned above resulted in the finding that excellent characteristics are exhibited by magnetooptical recording media having a specific first protective film, a specific magnetooptical recording film, a specific second protective film and a specific metallic film formed on a substrate in that order, and on the basis of this finding the present invention has been accomplished.

### OBJECT OF THE INVENTION

The present invention is intended to solve such problems associated with the prior art as mentioned above, and an object of the invention is to provide such magnetooptical recording media as having excellent oxidation resistance without deterioration in magnetooptical recording characteristics even when used for a long period of time, high C/N ratio, broad recording power margin, small dependence on linear velocity of recording sensitivity and excellent adhesion between the substrate and the protective film.

### SUMMARY OF THE INVENTION

The magnetooptical recording medium of the present invention having a first protective film (layer) [a first enhancing film (layer)], a magnetooptical recording film (layer), a second protective film (layer) [a second enhancing film (layer)] and a metallic film (layer) formed on a substrate in that order is characterized in that:
the first protective film (the first enhancing film) and the second protective film (the second enhancing film) are each composed of SiNx,
the magnetooptical recording film is composed of an amorphous alloy film with a magnetic easy axis perpendicular to the film containing (i) at least one metal selected from among 3d transition metals, (ii) a corrosion resistant metal and (iii) at least one element selected from among rare earth elements, the content of said corrosion resistant metal being 5-30 atom%, and
the metallic film is composed of an aluminum alloy.

In the magnetooptical recording medium of the invention as illustrated above, it is desirable that the substrate is composed of a cycloolefin random copolymer of ethylene and at least one of cycloolefins represented by the formula [I] or [II], said copolymer desirably having an intrinsic viscosity of 0.05-10 dl/g. 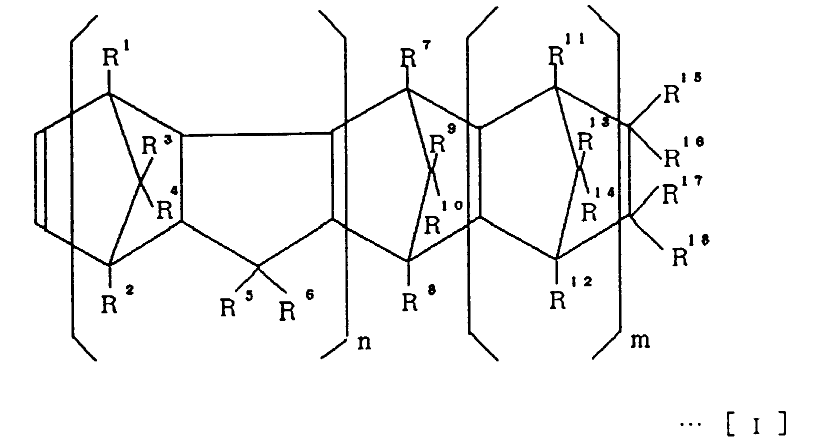 wherein n is 0 (zero) or 1, m is 0 (zero) or a positive integer, R¹ - R¹⁸ are individually hydrogen, halogen or hydrocarbon group, R¹⁵ - R¹⁸ may, linking together, form a mono- or polycyclic ring which may have a double bond, and R¹⁵ together with R¹⁶ or R¹⁷ together with R¹⁸ may form an alkylidene group. 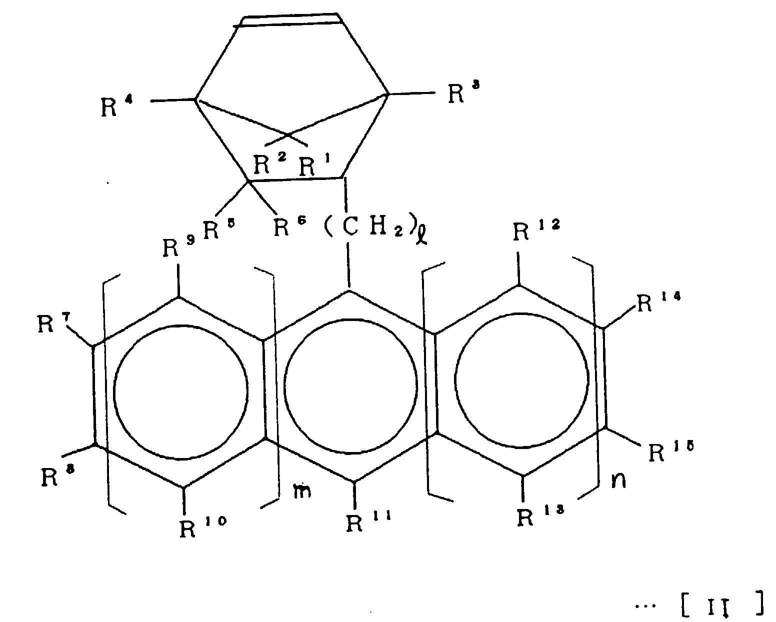 wherein 1 is 0 (zero) or an integer of at least 1, m and n are each 0 (zero), 1 or 2, R¹-R¹⁵ is individually hydrogen, halogen, aliphatic hydrocarbon group, aromatic hydrocarbon group or alkoxy group, and R⁵ (or R⁶) and R⁹ (or R⁷) may be linked together through an alkylene group of 1-3 carbon atoms or linked together directly without through the alkylene group.

In accordance with the present invention, there is provided a double-sided magnetooptical recording medium which is obtained by joining a first magnetooptical recording medium having the above-mentioned first protective film, the magnetooptical recording film, the second protective film and the metallic film formed on the substrate in that order to a second magnetooptical recording medium of the same structure as in the first magnetooptical recording medium so that the metallic film of the first magnetooptical recording medium and the metallic film of the second magnetooptical recording medium are positioned face to face through an adhesive layer.

Because of such film structure and film composition as mentioned above, the magnetooptical recording media of the present invention are excellent in oxidation resistance, free from deterioration of recording characteristics even when used for a long period of time, and high in C/N ratio, broad in recording power margin, small in dependence on linear velocity of recording sensitivity and also excellent in adhesion between the substrate and the first protective film.

### BRIEF DESCRIPTION OF THE DRAWINGS

Fig. 1 is a rough sectional view of the magnetooptical recording medium of the present invention.

Fig. 2 is a rough sectional view of the double-sided magnetooptical recording medium of the invention.
- 1 ...: Magnetooptical recording medium
- 2 ...: Substrate
- 3 ...: First protective film
- 4 ...: Magnetooptical recording film
- 5 ...: Second protective film
- 6 ...: Metallic film
- 20...: Double-sided magnetooptical recording medium
- 10a, 10b ...: Substrate
- 11a, 11b ...: First protective film
- 12a, 12b ...: Magnetooptical recording film
- 13a, 13b ...: Second protective film
- 14a, 14b ...: Metallic film
- 15 ...: Adhesive layer

### DETAILED DESCRIPTION OF THE INVENTION

The magnetooptical recording media of the present invention are illustrated below in detail.

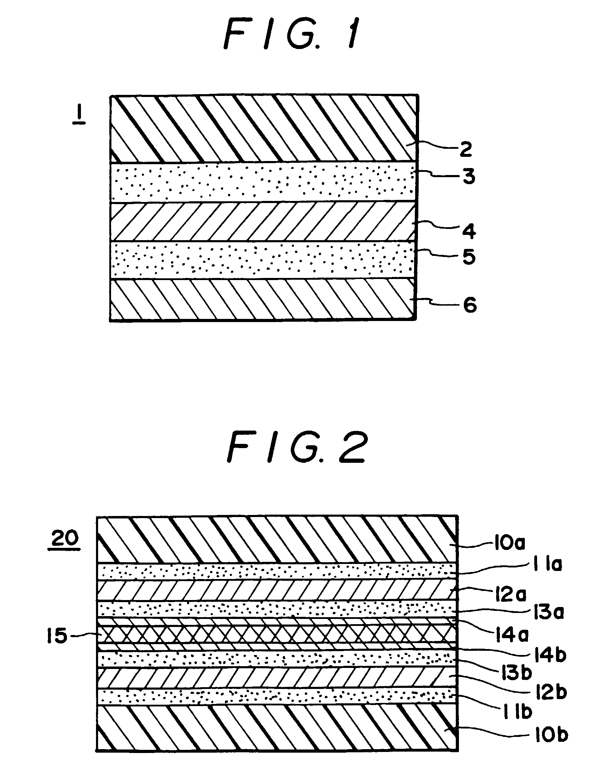

Fig. 1 is a rough sectional view of one embodiment of the magnetooptical recording media of the present invention.

In a magnetooptical recording medium 1 of the invention, a first protective film 3, magnetooptical recording film 4, second protective film 5 and metallic film 6 are laminated on a substrate 2 in that order.

### Substrate

Materials for the above-mentioned substrate 2 used in the invention are not particularly limited to specific ones. However, when laser beam is incident upon the substrate 2, the materials used therefor are preferably those which are transparent. Besides inorganic materials such as glass, aluminum and the like, such transparent materials include, for example, organic materials such as poly(methyl methacrylate), polycarbonate, polymer alloys of polycarbonate with polystyrene, such cycloolefin random copolymers as disclosed in U.S. Patent No. 4,614,778, such cycloolefin random copolymers (A) as mentioned below, poly4-methyl-1-pentene, epoxy resins, polyether sulfone, polysulfone, polyether imide and the like. Of these organic meterials, preferred are poly(methyl methacrylate), polycarbonate, such cycloolefin random copolymers as disclosed in U.S. Patent No. 4,614,778 and the cycloolefin random copolymers (A) as mentioned below.

From the standpoint of good adhesion particularly to the protective film, a small double refractive index, and oxidation resistance of the magnetooptical recording medium, particularly desirable materials for the substrate used in the present invention are cycloolefin random copolymers of (a) ethylene and (b) a cycloolefin represented by the following formula [I] or [II], said random copolymer having an intrinsic viscosity [η] of 0.05-10 dl/g as measured in decalin at 135°C.

This cycloolefin random copolymer desirably has a softening temperature (TMA) of 70°C and is called hereinafter "the cycloolefin random copolymer [A]". 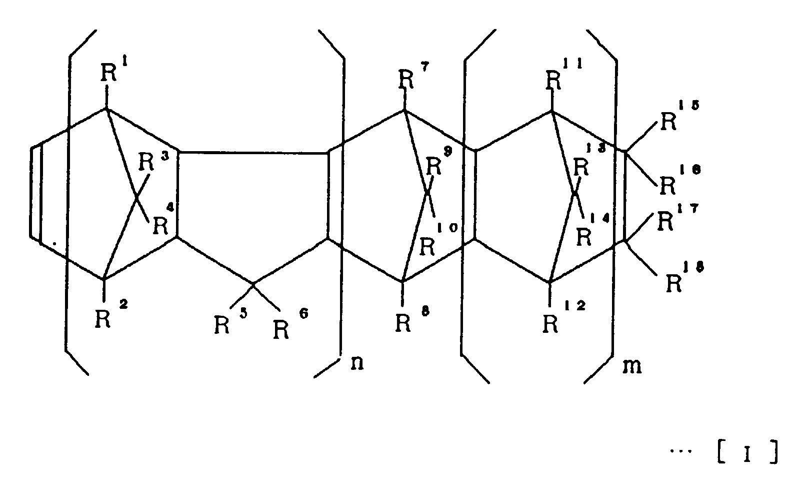 wherein n is 0 (zero) or 1, m is 0 (zero) or a positive integer, R¹ - R¹⁸ are individually hydrogen, halogen or hydrocarbon group, R¹⁵ - R¹⁸ may, linking together, form a mono- or polycyclic ring which may have a double bond, and R¹⁵ together with R¹⁶ or R¹⁷ together with R¹⁸ may form an alkylidene group. 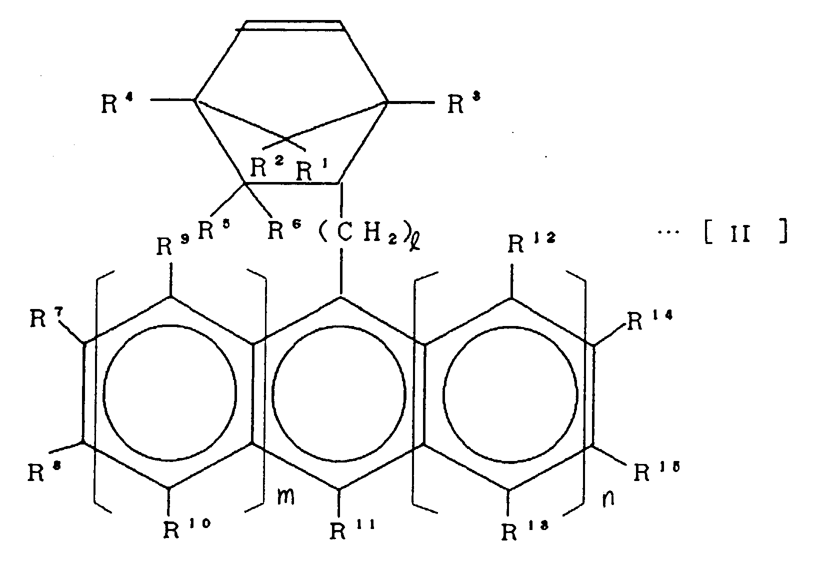 wherein p is 0 (zero) or an integer of at least 1, q and r are each 0 (zero), 1 or 2, R¹-R¹⁵ are individually an atom or group selected from the group consisting of hydrogen, halogen, aliphatic hydrocarbon group, aromatic hydrocarbon and alkoxy, and R⁵ (or R⁶) and R⁹ (or R⁷) may be linked together through an alkylene group of 1-3 carbon atoms or may be linked together directly without through any group.

In the above-mentioned formula [I], n is 0 (zero) or 1, preferably 0 (zero), and m is 0 (zero) or a positive integer, preferably 0-3. In the above-mentioned formula [II], p is 0 (zero) or an integer of at least 1, preferably an integer of 0-3.

R¹-R¹⁸ (formula [I]) or R¹-R¹⁵ (formula [II]) individually represent an atom or group selected from the group consisting of hydrogen, halogen and hydrocarbon, wherein the halogen includes, for example, fluorine, chlorine, bromine and iodine atoms, and the hydrocarbon group includes usually alkyl of 1-6 carbon atoms and cycloalkyl of 3-6 carbon atoms. Concrete examples of the alkyl include methyl, ethyl, isopropyl, isobutyl and amyl, and those of the cycloalkyl include cyclohexyl, cyclopropyl, cyclobutyl and cyclopentyl.

In the above-mentioned formula, R⁵ (or R⁶) and R⁹ (or R⁷) may be linked together through an alkylene group of 1-3 carbon atoms or may be linked together directly without through any group.

In the above-mentioned formula [I], R¹⁵-R¹⁸ may form, linking together (in combination), a mono- or polycyclic ring which may have a double bond, and R¹⁵ together with R¹⁶, or R¹⁷ together with R¹⁸ may form an alkylidene group. Such alkylidene group includes usually alkylidene of 2-4 carbon atoms, and concrete examples thereof include ethylidene, propylidene, isopropylidene and isobutylidene.

The cycloolefins represented by the above-mentioned formula [I] or [II] may easily be prepared by condensing cyclopentadienes with corresponding olefins or cycloolefins through Diels-Alder reaction.

The cycloolefins represented by the above-mentioned formula [I] or [II] used in the present invention include concretely:
bicyclo[2.2.1]hept-2-ene derivative,
tetracyclo[4.4.0.1^{2,5}.1^{7,10}]-3-dodecene derivative,
hexacyclo[6.6.1.1^{3,6}.1^{10,13}.0^{2,7}.0^{9,14}]-4-heptadecene derivative,
octacyclo[8.8.0.1^{2,9}.1^{4,7}.1^{11,18}.1^{13,16}.0^{3,8}.0^{12,17}]-5-docosene derivative,
pentacyclo[6.6.1.1^{3,6}.0^{2,7}.0^{9,14}]-4-hexadecene derivative,
heptacyclo-5-eicosene derivative,
heptacyclo-5-heneicosene derivative,
tricyclo[4.3.0.1^{2,5}]-3-decene derivative,
tricyclo[4.3.0.1^{2,5}]-3-undecene derivative,
pentacyclo[6.5.1.1^{3,6}.0^{2,7}.0^{9,14}]-4-pentadecene derivative,
pentacyclopentadecadiene derivative,
pentacyclo[4.7.0.1^{2,5}.0^{8,13}.1^{9,12}]-3-pentadecene derivative,
pentacyclo[7.8.0.1^{3,6}.0^{2,7}.1^{10,17}.0^{11,16}.1^{12,15}]-4-eicosane derivative, and
nonacyclo[9.10.1.1.4.7.0^{3,8}.0^{2,10}.0^{12,21}.1^{13,20}.0^{14,19}. 1^{15,19}]-5-pentacosene derivative.

Concrete examples of the above-mentioned compounds are shown below.

Bicyclo[2.2.1]hept-2-ene derivative including such as those mentioned below.

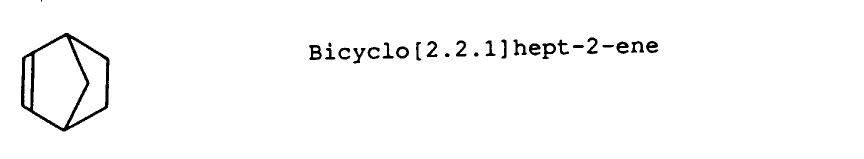

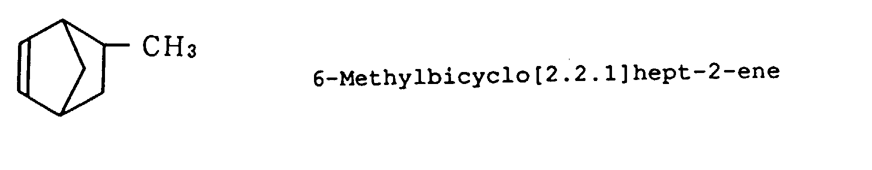

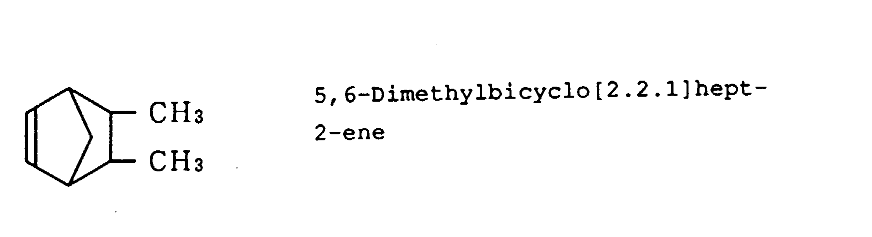

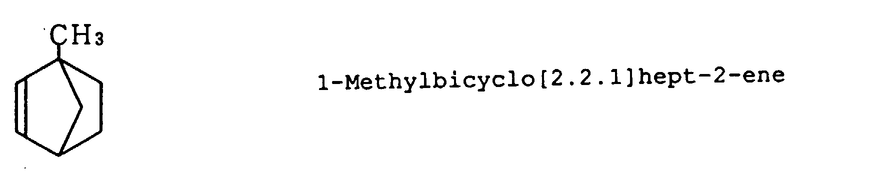

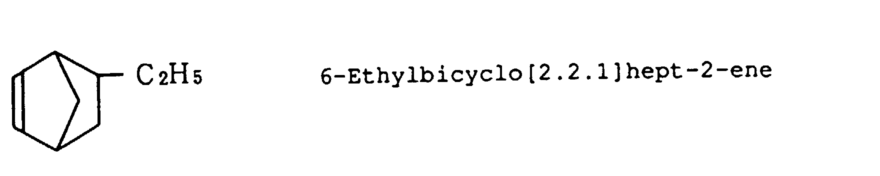

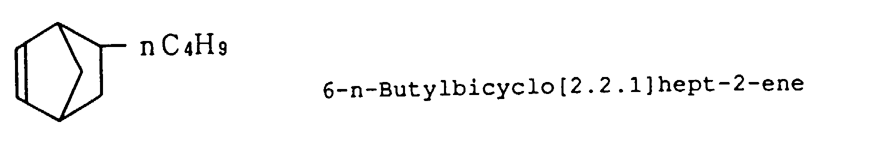

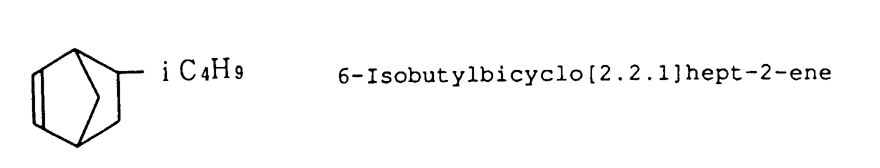

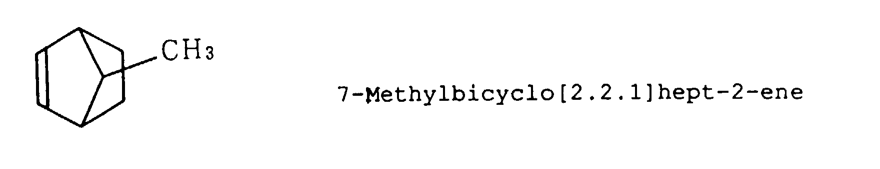

Tetracyclo[4.4.0.1^{2,5}.1^{7,10}]-3-dodecene derivative including such as those mentioned below.

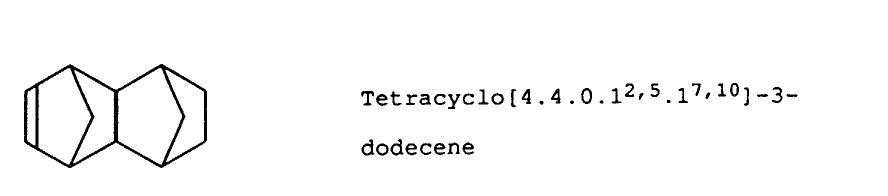

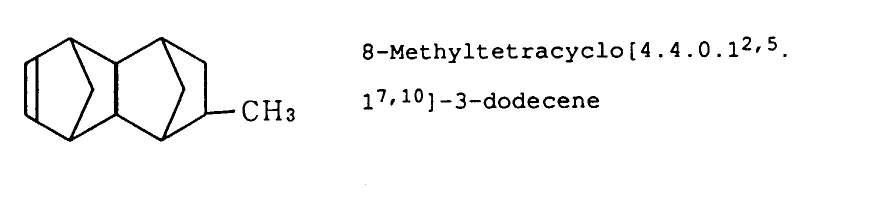

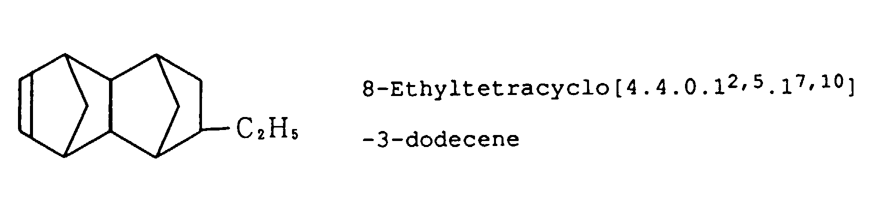

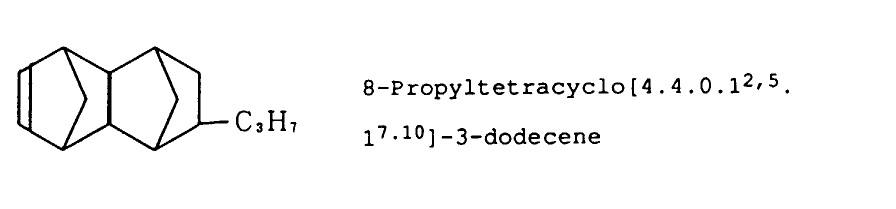

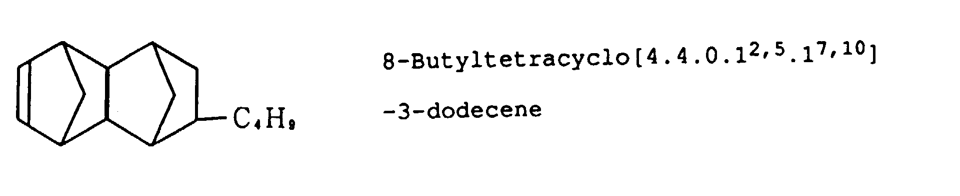

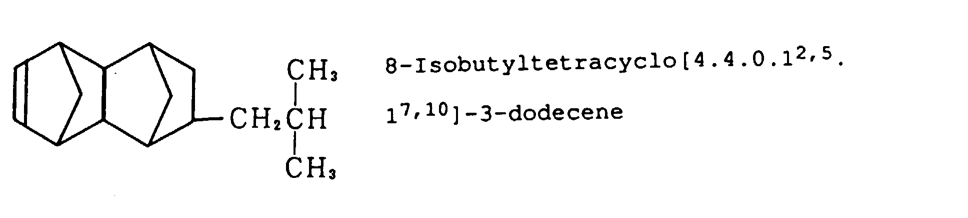

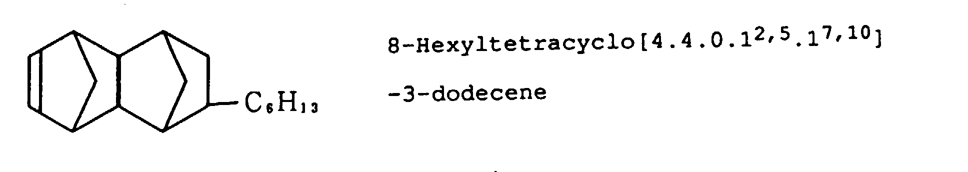

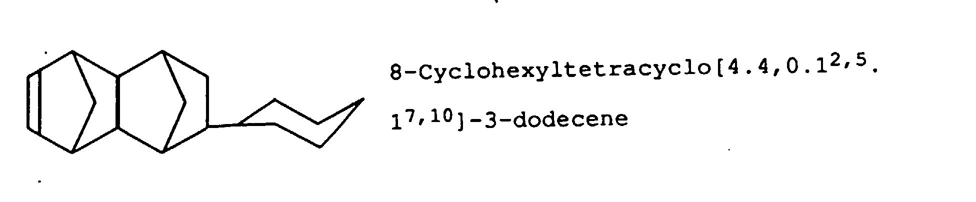

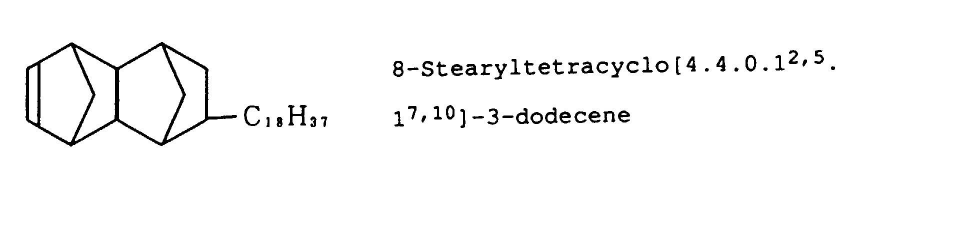

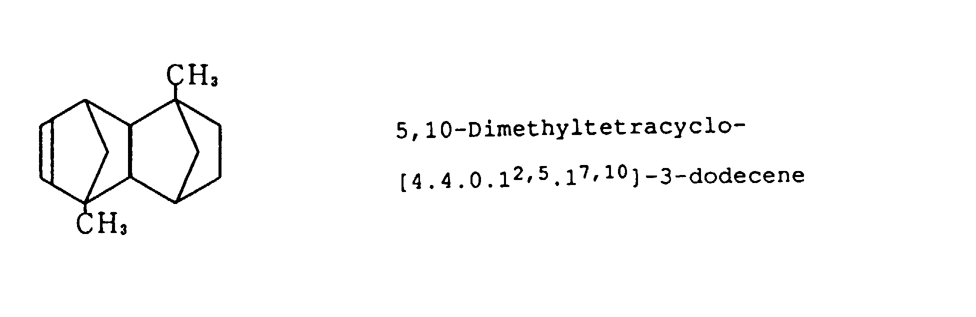

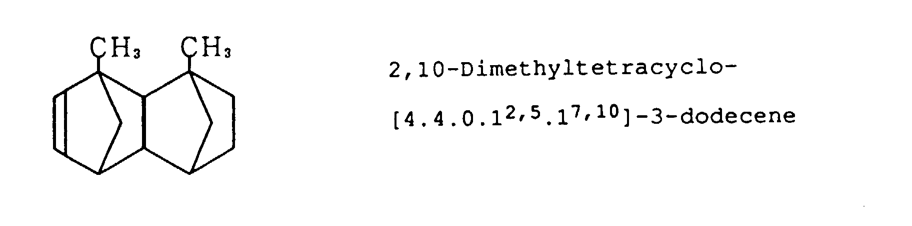

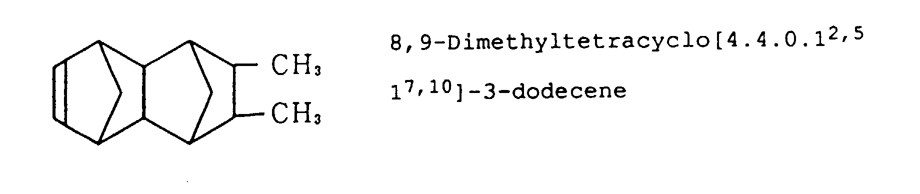

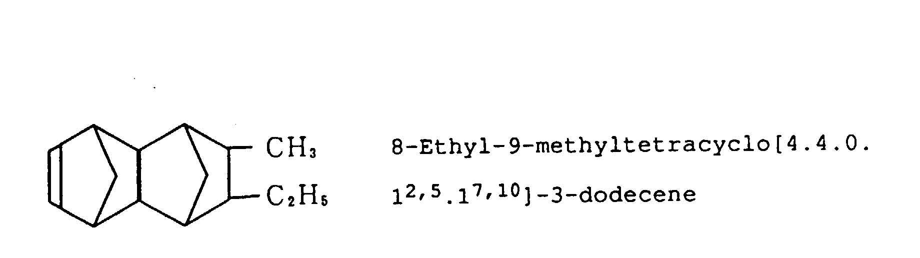

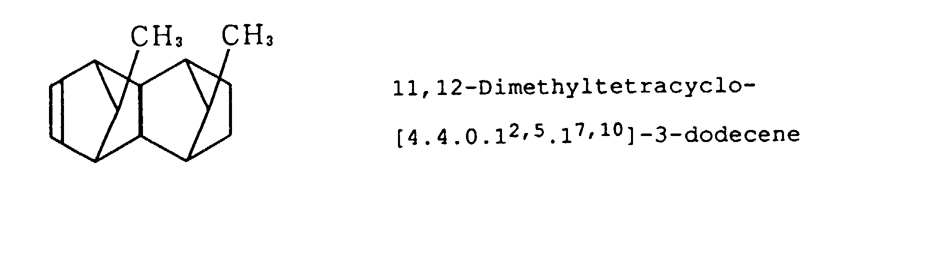

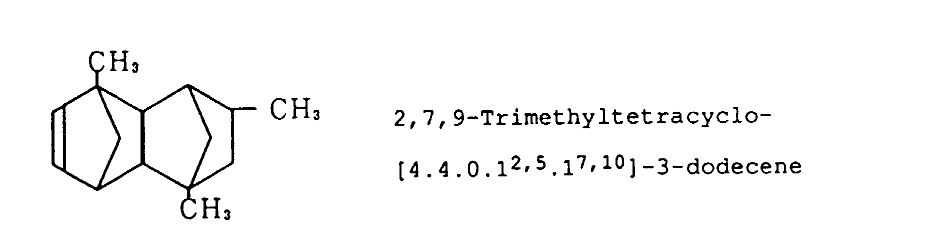

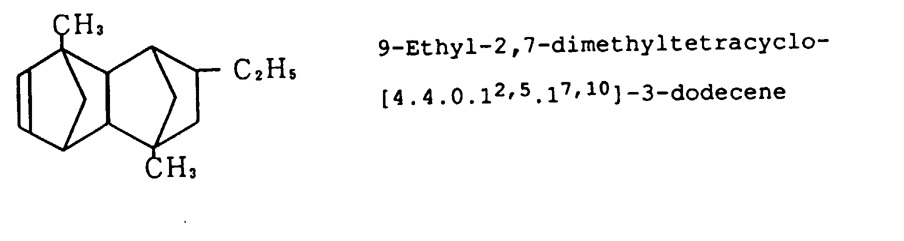

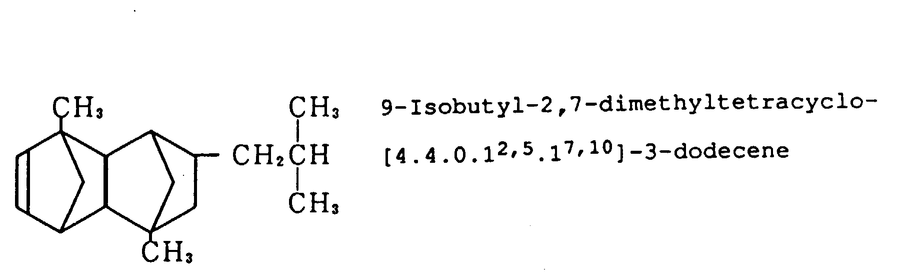

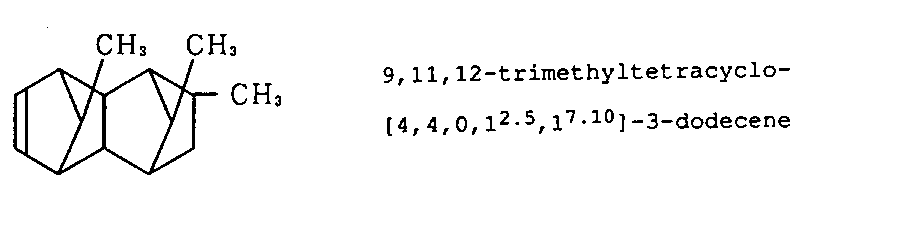

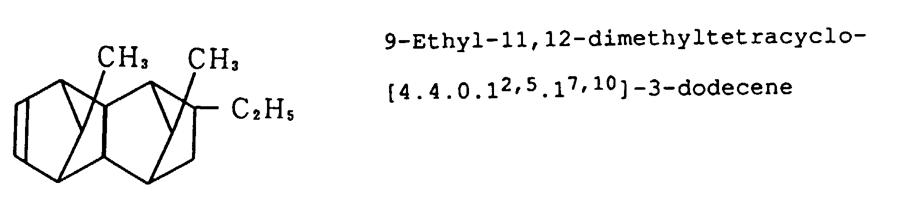

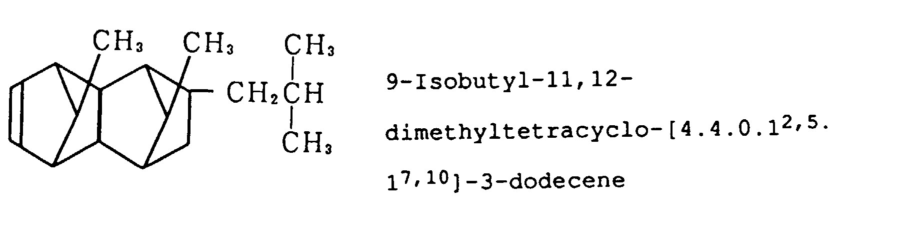

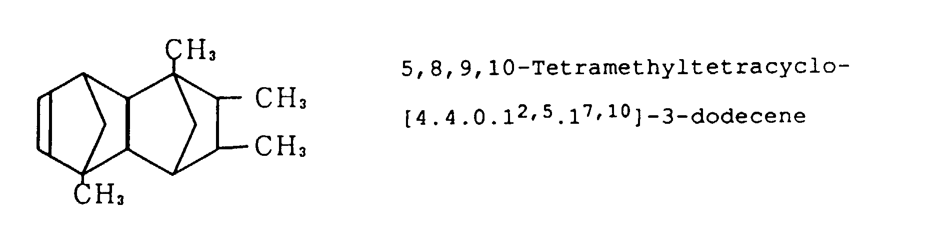

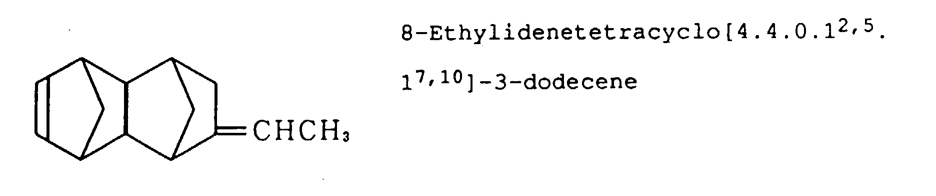

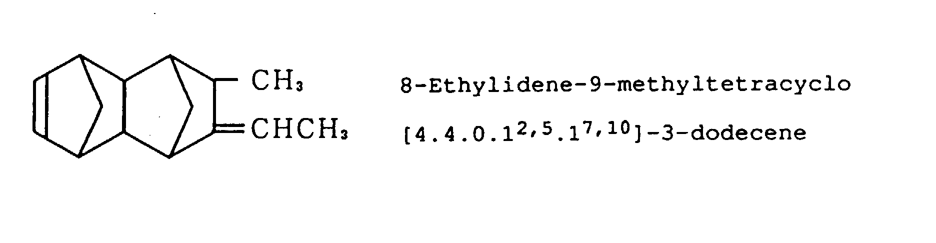

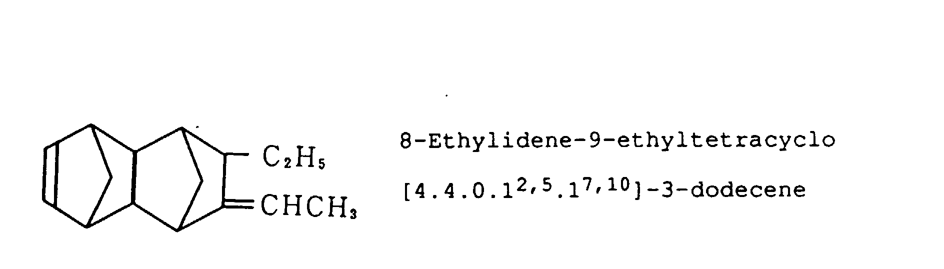

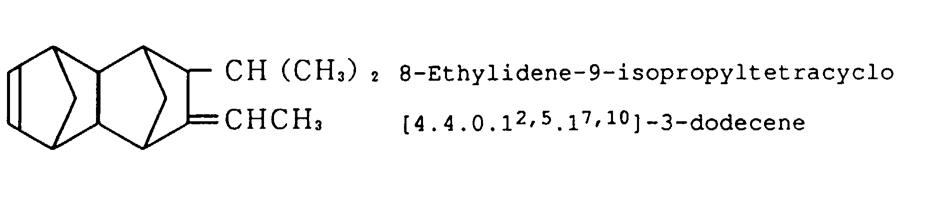

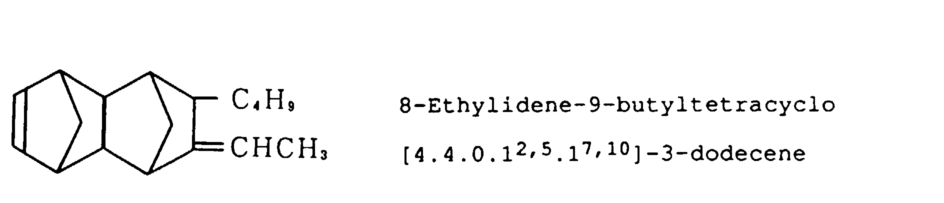

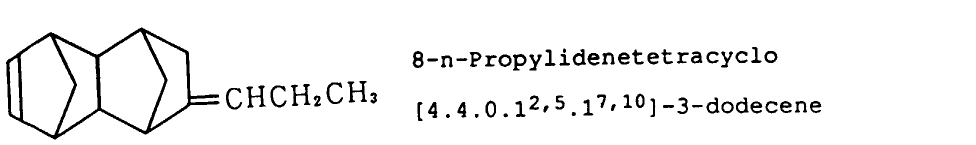

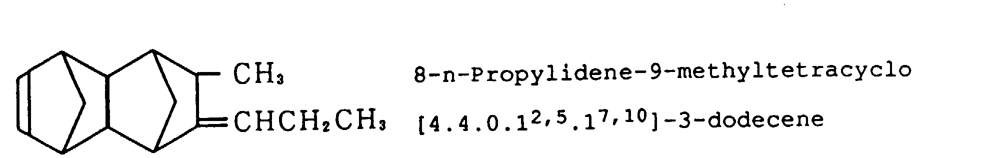

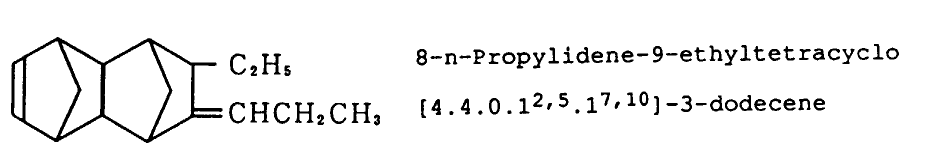

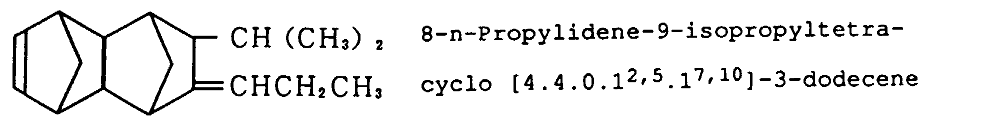

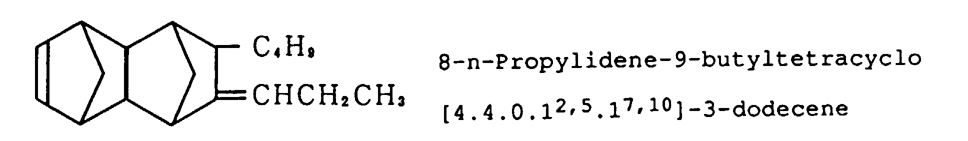

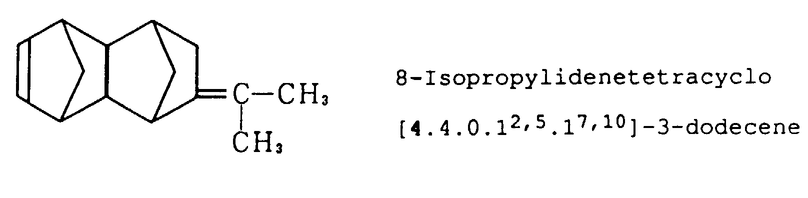

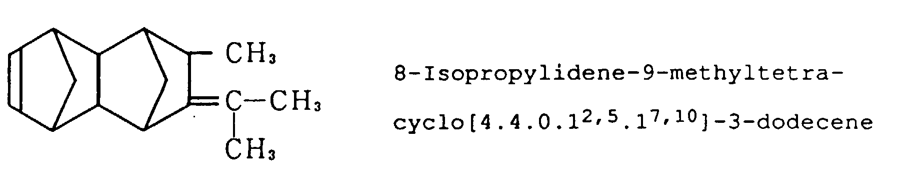

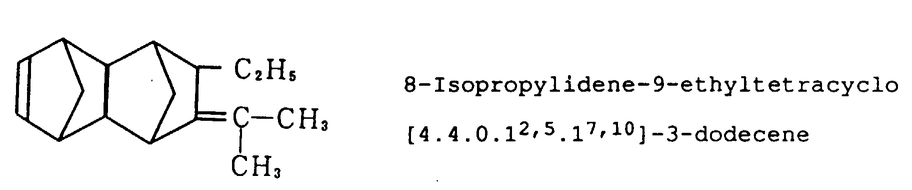

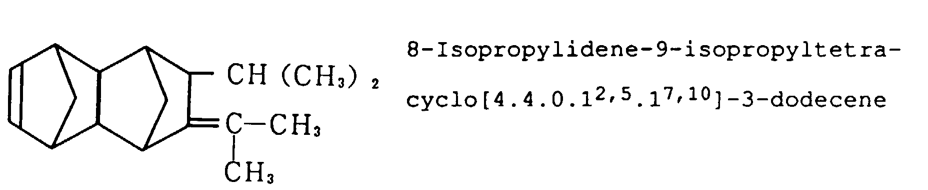

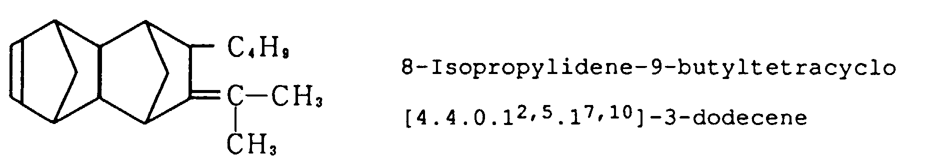

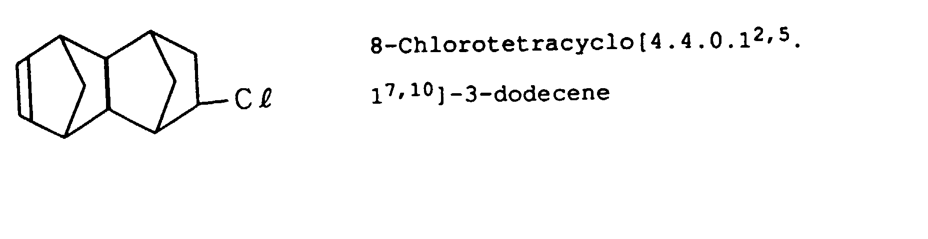

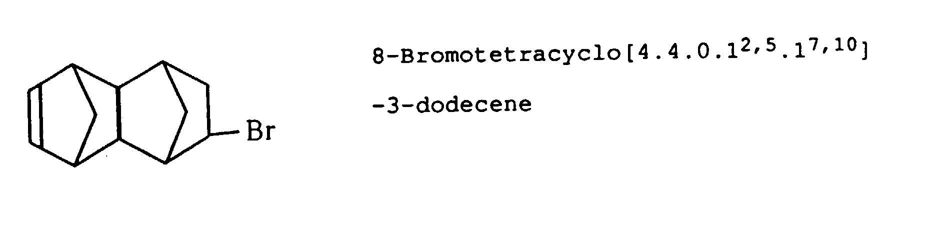

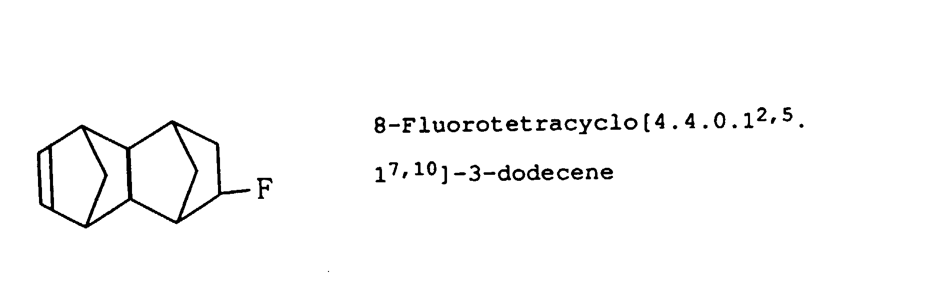

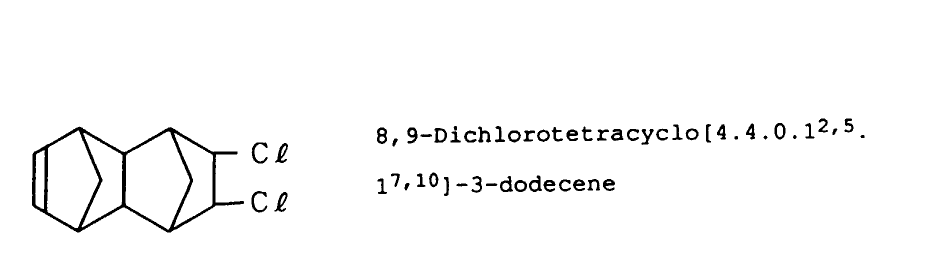

Hexacyclo[6.6.1.1^{3,6}.1^{10,13}.0^{2,7}.0^{9,14}]-4-heptadecene derivative including such as those mentioned below.

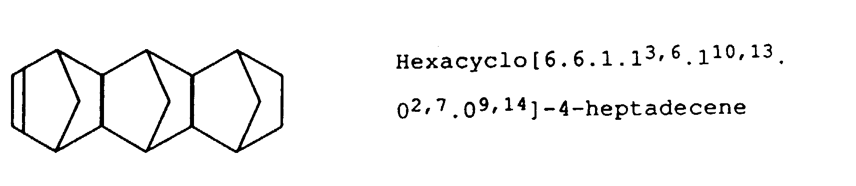

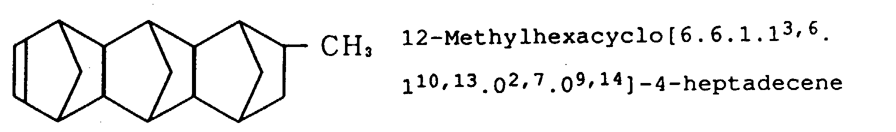

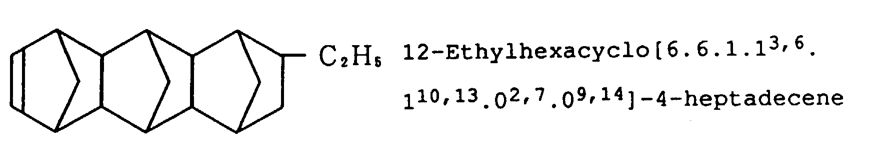

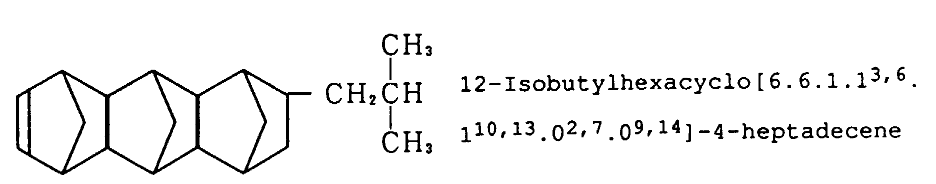

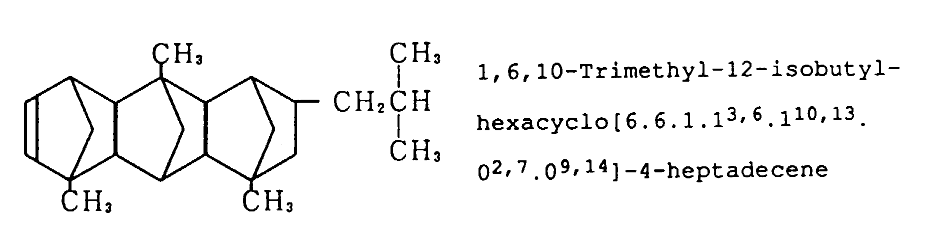

Octacyclo[8.8.0.1^{2,9}.1^{4,7}.1^{11,18},1^{13,16}.O^{3,8}.O^{12,17}]-5-docosene derivative including such as those mentioned below.

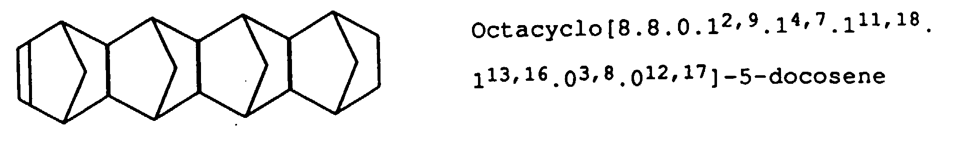

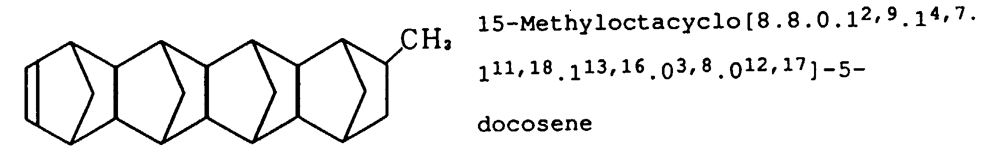

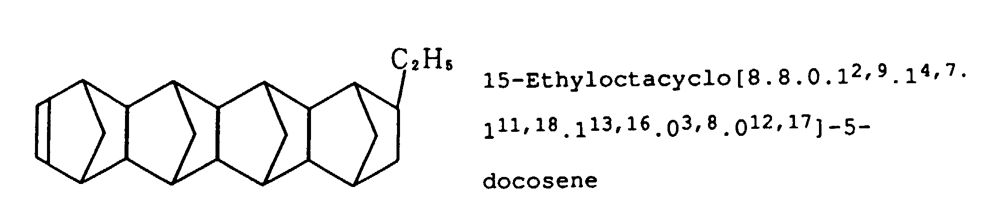

Pentacyclo[6.6.1.1^{3,6}.0^{2,7}.0^{9,14}]-4-hexadecene derivative including such as those mentioned below.

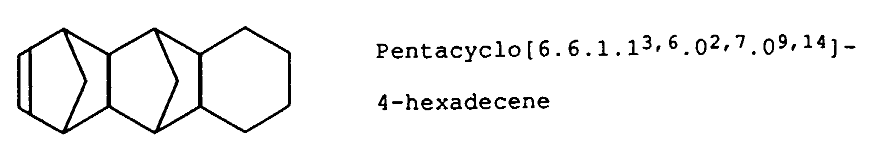

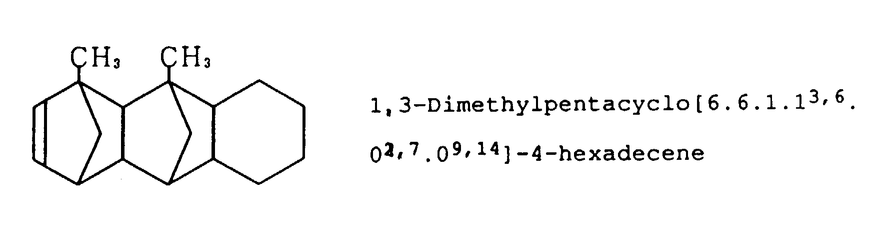

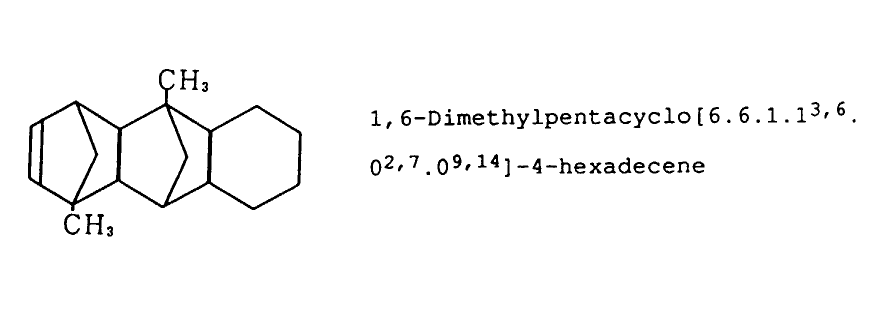

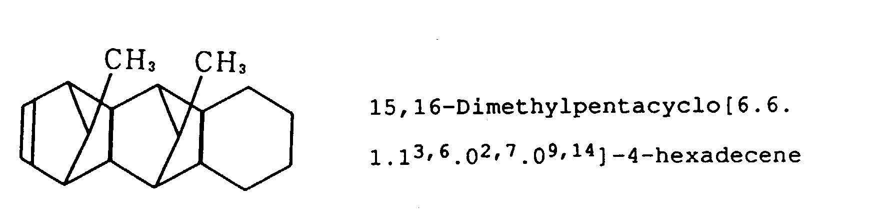

Heptacyclo-5-eicosene derivative or heptacyclo-5-heneicosene derivative including such as those mentioned below.

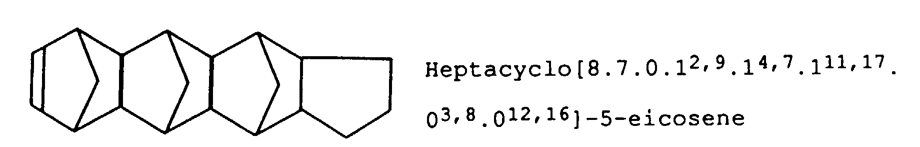

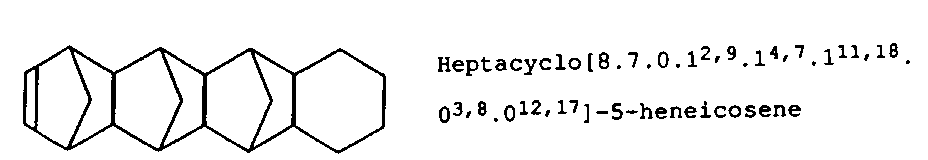

Tricyclo[4.3.0.1^{2,5}]-3-decene derivative including such as those mentioned below.

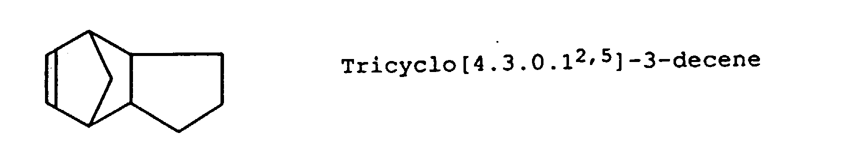

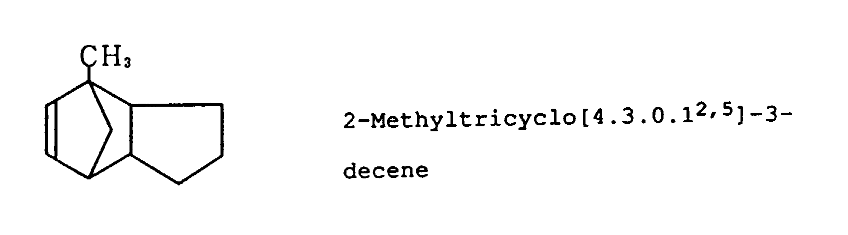

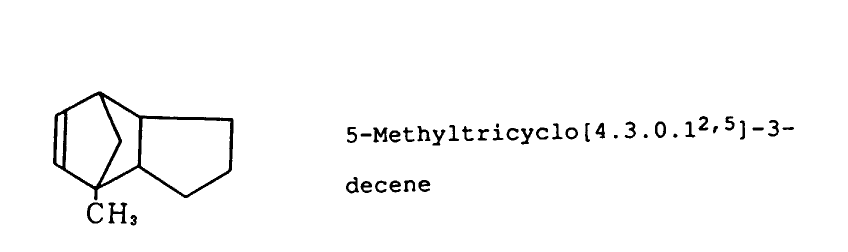

Tricyclo[4.4,0,1^{2,5}]-3-undecene derivative including such as those mentioned below.

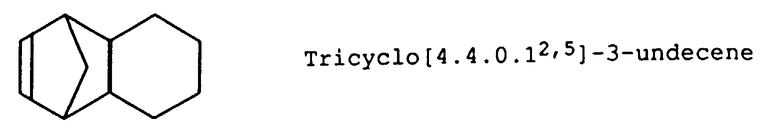

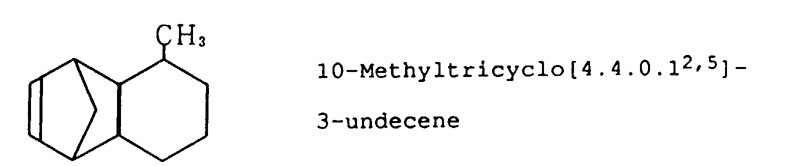

Pentacyclo[6,5,1,1^{3,6}.0^{2,7}.0^{9,13}]-4-pentadecene derivative including such as those mentioned below.

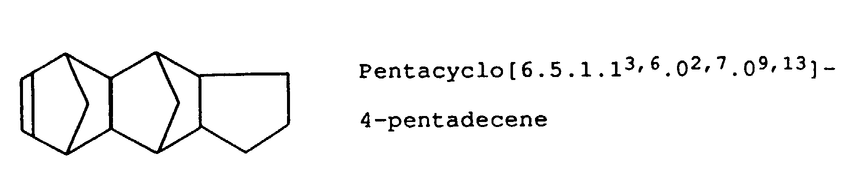

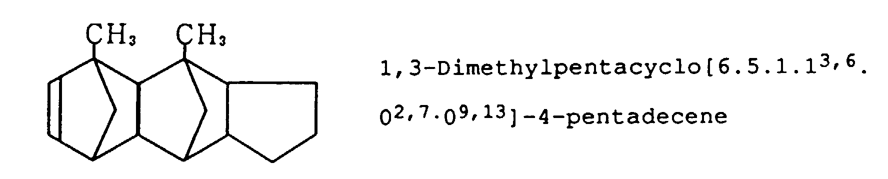

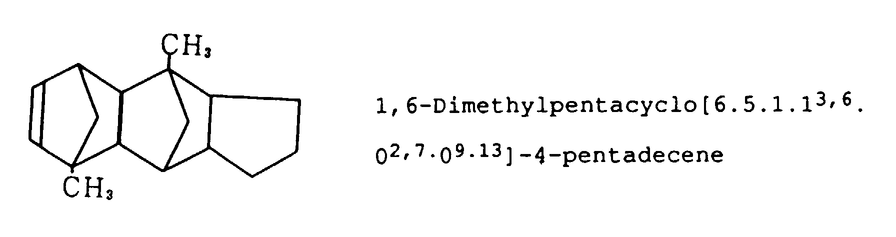

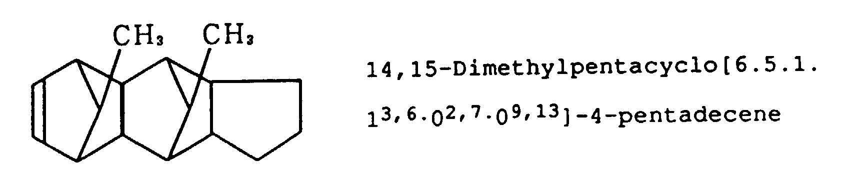

Diene compound including such as mentioned below.

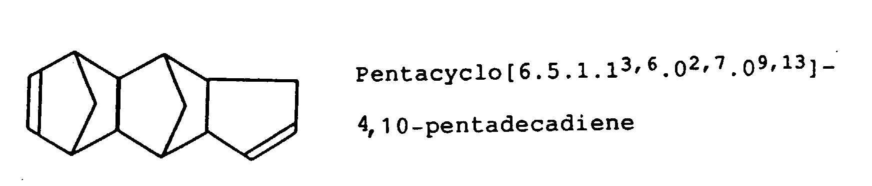

Pentacyclo[7.4.0.1^{2,5}.1^{9,12}.0^{8,13}]-3-pentadecene derivative including such as those mentioned below.

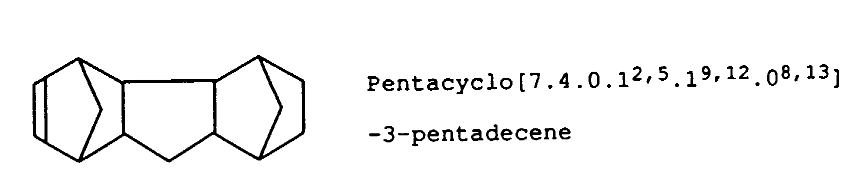

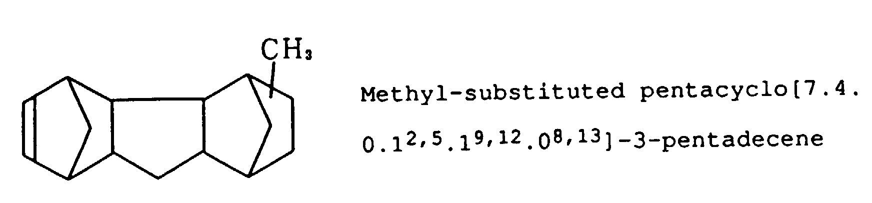

Heptacyclo[8.7.0.1^{3,6}.1^{10,17}.1^{12,15}.0^{2,7}.0^{11,16}]-4-eicosene derivative including such as those mentioned below.

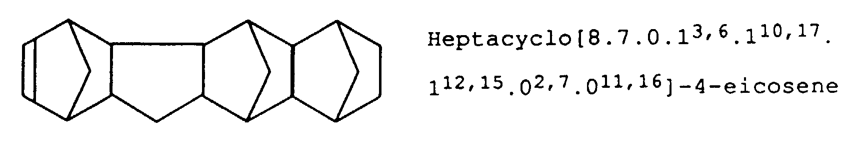

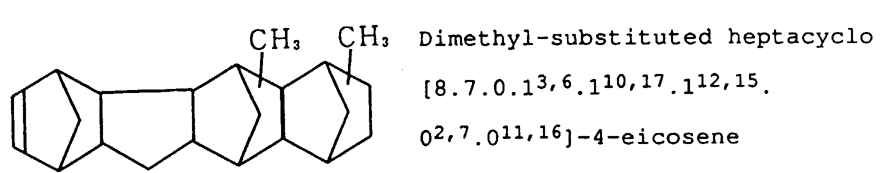

Nonacyclo[10.9.1.1^{4,7}.1^{13,20}.1^{15,18}.0^{3,8}.0^{2,10}.0^{12,21}. 0^{14,19}]-5-pentacosene derivative including such as those mentioned below.

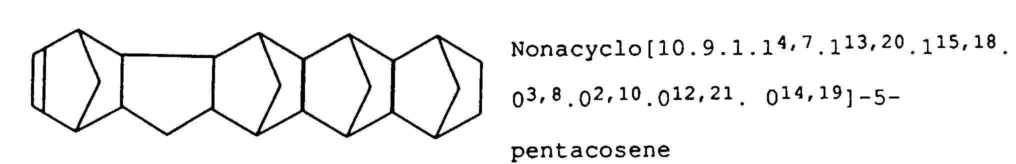

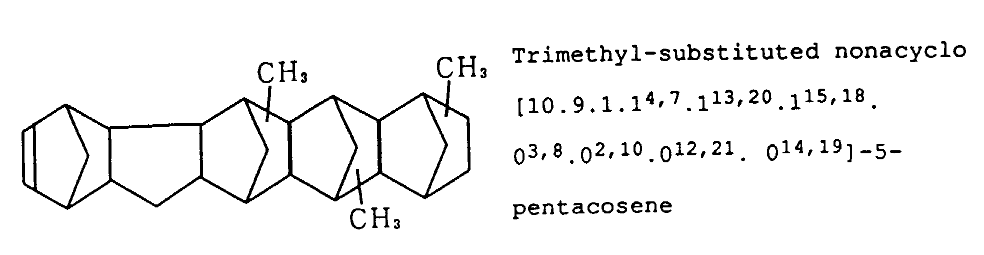

The cycloolefins of the above-mentioned formula [II] used in the present invention include concretely such compounds as shown below.

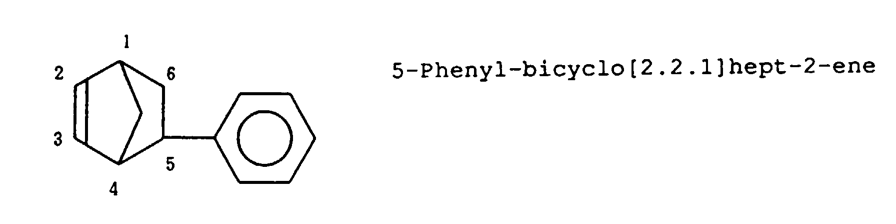

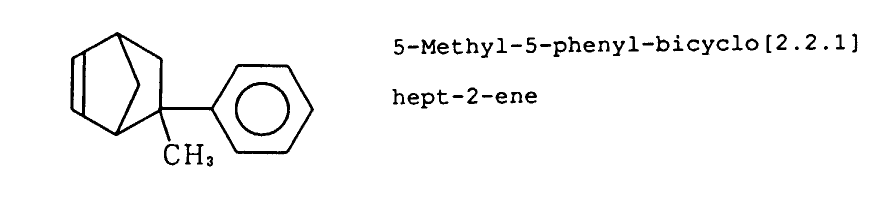

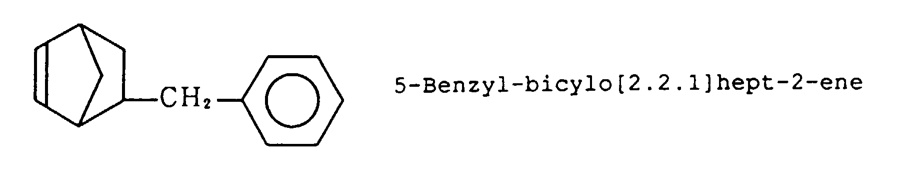

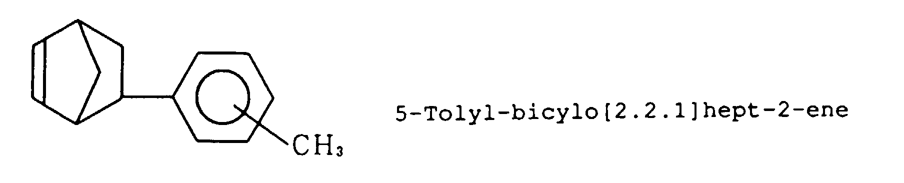

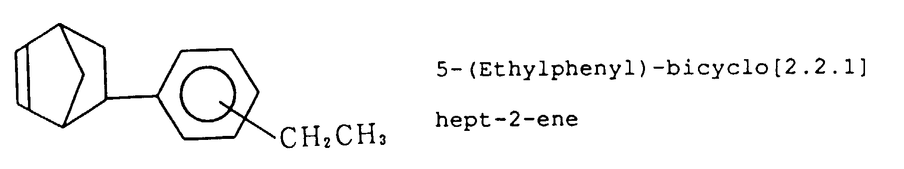

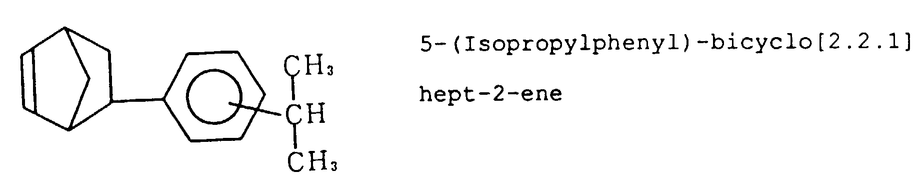

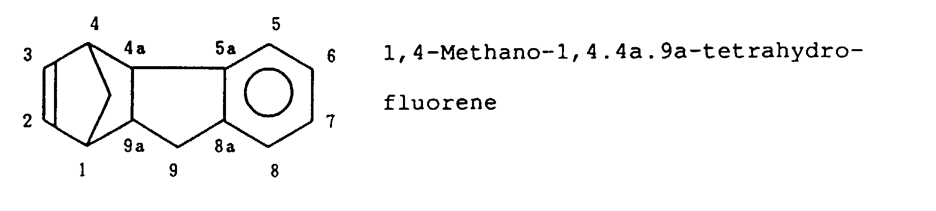

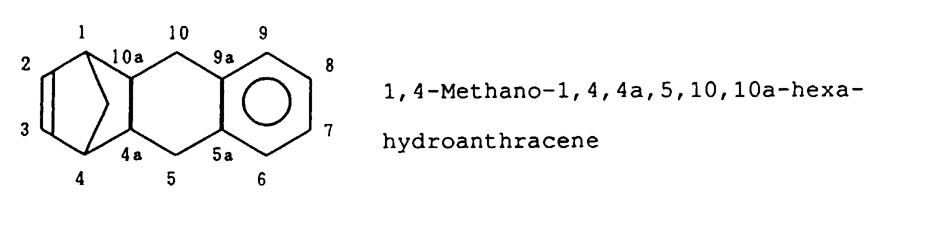

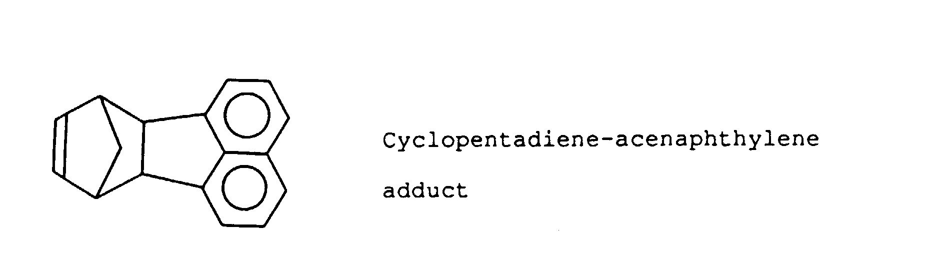

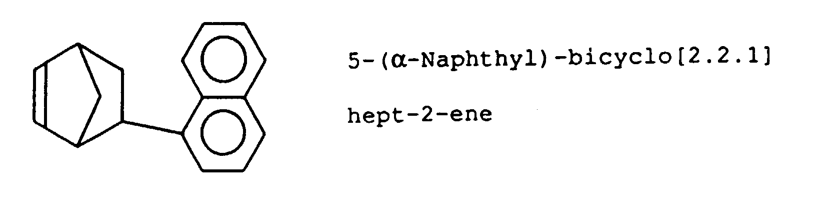

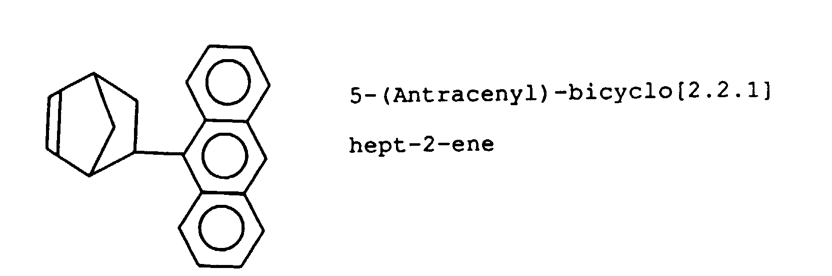

The cycloolefin random copolymer comprising ethylene units and the aforementioned cycloolefin units as essential component may contain, if necessary, in addition to these two essential component, other copolymerizable unsaturated monomer units within limits prejudicial to the object of the present invention. Such copolymerizable unsaturated monomer units useful in the cycloolefin random copolymer may be derived from monomers including α-olefins of 3-20 carbon atoms such as propylene, 1-butene, 4-methyl-1-pentene, 1-hexene, 1-octene, 1-decene, 1-dodecene, 1-tetradecene, 1-hexadecene, 1-octadecene and 1-eicosane, and these unsaturated monomers may be used, for example, in amounts less than equimolar amount of the ethylene units present in the resulting random copolymer.

In the cycloolefin random copolymer [A] as mentioned above, a recurring unit (a) derived from ethylene is present in a proportion of 40-85 mol%, preferably 50-75 mol%, and a recurring unit (b) derived from the cycloolefin is present in a proportion of 15-60 mol%, preferably 25-50 mol%, and the recurring units (a) and (b) are arranged substantially linear at random. The constitution in the resulting random copolymer of ethylene and cycloolefin was determined by ¹³C-NMR. The fact that this random copolymer is substantially linear and has no gel-like crosslinked structure can be confirmed by the fact that the copolymer completely dissolves in decalin at 135°C.

The cycloolefin random copolymer [A] has an intrinsic viscosity [η], as measured in decalin at 135°C, of 0.05-10 dl/g, preferably 0.08-5 dl/g.

A softening temperature (TMA), as measured with a thermal mechanical analyzer, of the cycloolefin random copolymer [A] is at least 70°C, preferably 90-250°C and especially 100-200°C. This softening temperature (TMA) was determined by the behavior on heat deformation of a sheet of a 1 mm thick of the cycloolefin random copolymer using Thermomechanical Analyser (manufactured by Du Pont). That is, a quartz needle is put vertically on the sheet under a load of 49 g, the sheet is then heated at a heating rate of 5°C/min, and the temperature at which the needle has intruded into the sheet to a depth of 0.635 mm is taken as TMA. A glass transition temperature (Tg) of this cycloolefin random copolymer [A] is usually 50-230°C, preferably 70-210°C.

A crystallinity index, as measured by X ray diffractometry, of the cycloolefin random copolymer [A] is 0-10 %, preferably 0-7 %, especially 0-5 %.

In the present invention, it is desirable to form a substrate from a cycloolefin random copolymer composition prepared by incorporating into the cycloolefin random copolymer [A] having the softening temperature (TMA) of at least 70°C a cycloolefin random copolymer (hereinafter called "the cycloolefin random copolymer [B]) which is a copolymer of ethylene and cycloolefin represented by the aforementioned formula [I] or [II] having an intrinsic viscosity [η] of 0.01-5 dl/g and a softening temperature (TMA) of less than 70°C.

In the cycloolefin random copolymer [B] having the softening temperature (TMA) of less than 70°C, a recurring unit (a) derived from ethylene is present in a proportion of 60-98 mol%, preferably 60-95 mol%, and a recurring unit (b) derived from the cycloolefin is present in a proportion of 2-40 mol%, preferably 5-40 mol%, and the recurring units (a) and (b) are arranged substantially linear at random. The constitution in the resulting random copolymer of ethylene and cycloolefin was determined by ¹³C-NMR. The fact that this cycloolefin random copolymer [B] is substantially linear and has no gel-like crosslinked structure can be confirmed by the fact that the copolymer completely dissolves in decalin at 135°C.

The cycloolefin random copolymer [B] has an intrinsic viscosity [η], as measured in decalin at 135°C, of 0.01-5 dl/g, preferably 0.05-5 dl/g, more preferably 0.08-3 dl/g.

A softening temperature (TMA), as measured with a thermal mechanical analyzer, of the cycloolefin random copolymer [B] is less than 70°C, preferably -10-60°C and especially 10-55°C. A glass transition temperature (Tg) of this cycloolefin random copolymer [B] is usually -30-60°C, preferably -20-50°C.

A crystallinity index, as measured by X-ray diffractometry, of the cycloolefin random copolymer [B] is 0-10%, preferably 0-7% and especially 0-5%.

In the case where the above-mentioned cycloolefin random copolymer composition is used as a raw material for the substrate in the present invention, the weight ratio in the composition of the cycloolefin random copolymer [A]/the cycloolefin random copolymer [B] is from 100/0.1 to 100/10, preferably 100/0.3 to 100/7 and especially from 100/0.5 to 100/5. By using this cycloolefin copolymer composition having blended the above-mentioned [A] and [B] components in the proportion as defined above, the substrate resulting therefrom has such an effect that adhesion between the substrate and the first protective film used in the present invention under severe conditions is further improved in comparison with the case of a substrate composed of the [A] component alone, while maintaining excellent transparency and surface smoothness inherent in the substrate. In the substrate of the present invention composed of the above-mentioned cycloolefin random copolymer composition containing a blend of the [A] and [B] components as defined above, excellent adhesion obtained between the substrate and the first protective film used in the invention has such characteristics that no undesirable changes in the adhesion thus obtained will occur even after allowing the substrate bearing the first protective film to stand under the circumstances of high temperature and humidity.

The above-mentioned cycloolefin random copolymers [A] and [B] constituting the substrate of the invention may be prepared by suitably selecting the conditions under which these copolymers are prepared in accordance with the processes proposed by the present applicant in Japanese Patent L-O-P Publns. Nos. 168708/1985, 120816/1986, 115912/1986 and 115916/1986, Japanese Patent Applns. Nos. 95905/1986 and 95906/1986, and Japanese Patent L-O-P Publns. Nos. 271308/1986 and 272216/1986.

The resins constituting the substrate of the invention may include, in addition to the above-mentioned cycloolefin random copolymers, polymers or copolymers containing a recurring unit represented by the following formula [III] formed by ring opening polymerization of the aforementioned cycloolefin represented by the formula [I], and further include polymers or copolymers containing a recurring unit represented by the following formula [IV] formed by hydrogenation of the recurring unit represented by the formula [III].

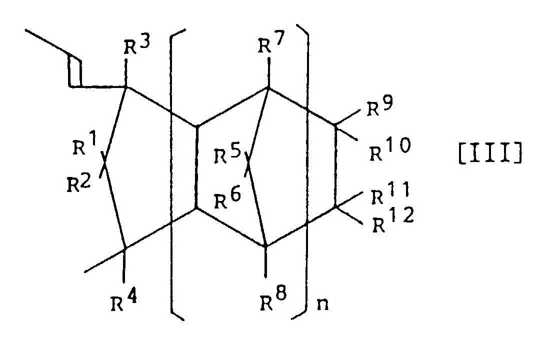

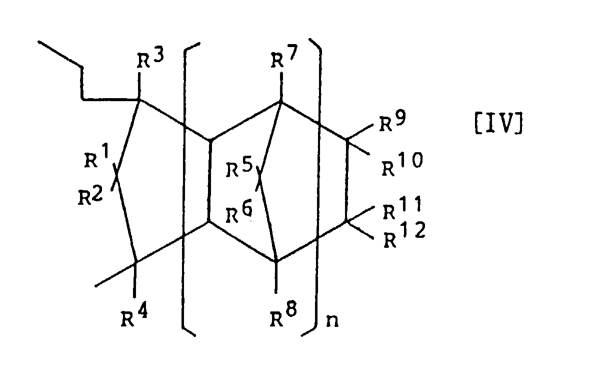

In the above formulas [III] and [IV], R¹-R¹² are as defined in the aforementioned formula [I].

The cycloolefin random copolymers as illustrated above may be incorporated with various additives such as heat stabilizers, weathering stabilizers, antistatic agents, slip agents, anti-blocking agents, anti-fogging agents, lubricants, dyes, pigments, natural oil, synthetic oil and wax, and amounts of these additives used may be suitably decided. For example, the stabilizers which may be used optionally include, in concrete, phenolic antioxidants such as tetrakis[methylene-3(3,5-di-t-butyl-4-hydroxyphenyl) propionate]methane, β-(3,5-di-t-butyl-hydroxyphenyl) propionic acid alkyl ester (particularly preferred are alkyl esters of not more than 18 carbon atoms) and 2,2'-oxamidebis[ethyl-3-(3,5-di-t-butyl-hydroxyphenyl)] propionate, fatty acid metal salts such as zinc stearate, calcium stearate and calcium 12-hydroxystearate, and fatty acid esters of polyhydric alcohol such as glycerin monostearate, glycerin monolaurate, glycerin distearate, pentaerythritol monostearate, pentaerythritol distearate and pentaerythritol tristearate. These stabilizers may be used singly, but may also be used in combination, for example, a combination use of tetrakis[methylene-3-(3,5-di-t-butyl-4-hydroxyphenyl)propionate]methane with zinc stearate and glycerin monostearate.

In the present invention, it is desirable to use phenolic antioxidants in combination with fatty acid esters of polyhydric alcohol, said fatty acid esters being preferably those of polyhydric alcohol exhibiting at least three valences, in which part of the hydroxy groups has been esterified.

Such fatty acid esters of polyhydric alcohol as mentioned above include concretely fatty acid esters of glycerin such as glycerin monostearate, glycerin monolaurate, glycerin monomyristate, glycerin monopalmitate, glycerin distearate and glycerin dilaurate, and fatty acid esters of pentaerythritol such as pentaerythritol monostearate, pentaerythritol monolaurate, pentaerythritol distearate, pentaerythritol dilaurate and pentaerythritol tristearate.

The phenolic antioxidants as mentioned above are used in an amount, based on 100 parts by weight of the cycloolefin random copolymer composition, of 0.01-10 parts by weight, preferably 0.05-3 parts by weight and especially 0.1-1 part by weight, and the fatty acid esters of polyhydric alcohol are used in an amount, based on 100 parts by weight of the composition, of 0.01-10 parts by weight, preferably 0.05-3 parts by weight.

In the magnetooptical recording media of the present invention, the substrate used is preferably composed of the cycloolefin random copolymer [A] or the composition containing said cycloolefin random copolymer [A] as aforesaid, and these media are superior in optical properties and in adhesion between said substrate and a first protective film formed thereon and accordingly the recording film is excellent in long-term stability and, at the same time, is effectively prevented from oxidation. Further the warp of substrate is rather small even when the substrate is kept in high humidity for a long period of time.

The magnetooptical recording media having the above-mentioned substrate are excellent in service durability, and they are free from cracking.

A thickness of the substrate is not limited particularly, the substrate 2 of the present invention as illustrated hereinbefore has preferably a thickness of 0.5-mm, more preferably 1-2 mm.

### Protective film

The first protective film 3 and the second protective film 5 used in the magnetooptical recording medium 1 of the present invention are films represented by the constitutional formula SiNx, for example, silicon nitride or silicon nitride-containing films.

Particularly useful protective films of the formula SiNx in which x is preferably 0 < x ≤ 4/3 include concretely films of silicon nitride such as Si₃N₄ (silicon tetranitride) or films of the formula SiNx containing a mixture of Si₃N₄ and Si, in which x is 0 < x < 4/3. Such protective films as represented by the formula SiNx may be formed by the sputtering method using Si₃N₄ or Si₃N₄ and Si as a target. Such protective films may also be formed by the sputtering method using a Si target in a nitrogen atmosphere. The first protective film 3 and the second protective film 5 represented by the formula SiNx desirably have a refractive index of usually at least 1.8 preferably 1.8-2.2, and these protective films play a role in preventing the magnetooptical recording film 4 mentioned later from oxidation or the like deterioration or function as an enhancing film to improve recording characteristics of said magnetooptical recording film 4. These protective films represented by the formula SiNx (0 < x ≤ 4/3) are also excellent particularly in crack resistance.

The magnetooptical recording media of the present invention are broad in recording power margin and are small in dependence on linear velocity, because the magnetooptical recording media have a four films laminated structure of the first protective film, a specific magnetooptical recording film, the second protective film and a metallic film composed of an aluminum alloy on the substrate, and the first protective film and the second protective film are composed of SiNx.

The magnetooptical recording medium comprising the first protective film of the above-mentioned film thickness has a large θk. Further the magnetooptical recording medium comprising the second protective film of the above-mentioned film thickness has broad recording power margin without deteriorating excellent C/N ratio.

The first protective film 3 of the invention has a film thickness of 500-2000 Å, preferably 800-1500 Å, and the second protective film 5 has a film thickness of 50-2000 Å, preferably 50-1000 Å and especially 100-700 Å or thereabouts.

### Magnetooptical recording film

The magnetooptical recording film 4 comprises (i) at least one metal selected from 3d transition metals, and (iii) at least one element selected from among rare earth elements.

In the present invention, the magnetooptical recording film 4 comprises (i) at least one metal selected from 3d transition metals, (ii) at least one metal selected from corrosion-resistant metals, and (iii) at least one element selected from among rare earth elements.

Useful as the 3d transition metals (i) are Fe, Co, Ti, V, Cr, Mn, Ni, Cu and Zn, and among these, preferred is Fe or Co, or both of them.

This 3d transition metal is contained in the magnetooptical recording film 4 in an amount of 20-90 atom%, preferably 30-85 atom% and especially 35-80 atom%. Useful corrosion-resistant metals are Pt, Pd, Ti, Zr, Ta and Nb, and among these, preferred are Pt, Pd and Ti, and particularly preferred is Pt or Pd, or both of them.

In the magnetooptical recording film 4, the corrosion-resistant metal is present based on all atoms constituting the magnetooptical recording film in an amount of not more than 30 atom%, preferably 5-30 atom%, more preferably 5-25 atom%, especially 10-25 atom% and more specifically 10-20 atom%.

By incorporating the corrosion-resistant metal in the magnetooptical recording film 4 in the above-mentioned amount, oxidation resistance of said recording film can be enhanced.

In addition, the change of the coercive force Hc of the magnetooptical recording film is small and the decrease of the Kerr rotation angle is also small after a long period of time.

When the corrosion-resistant metal content exceed 30 atom%, on the other hand, the resulting amorphous alloy film undesirably tends to decrease in Curie point to a temperature below room temperature. The magnetooptical recording film 4 contains, in addition to the above-mentioned component (i), at least one rare earth element selected from the following group.

Included in the group of rare earth element mentioned above are Gd, Tb, Dy, Ho, Er, Tm, Yb, Lu, La, Ce, Pr, Nd, Pm, Sm and Eu. Of these elements, particularly preferred are Gd, Tb, Dy, Ho, Nd, Sm and Pr.

At least one element selected from the above-mentioned group is present in the magnetooptical recording film 4 in an amount of 5-50 atom%, preferably 8-45 atom% and especially 10-40 atom%.

In the present invention, the magnetooptical recording film 4 desirably have the following composition.

### (i) 3d transition metal

The magnetooptical recording films used in the present invention contain desirably Fe or Co, or both of them as the 3d transition metal (i), and the content of Fe and/or Co in the recording film is at least 40 atom% but not more than 80 atom%, preferably at least 40 atom% but less than atom% and especially at least 40 atom% but not more than 59 atom%.

In the magnetooptical recording film, Fe and/or Co is present desirably in such an amount that Co/(Fe+Co) ratio (atomic ratio) is at least 0 but not more than 0.3, preferably at least 0 but not more than 0.2 and especially at least 0.01 but not more than 0.2.

When the amount of Fe and/or Co used in the magnetooptical recording film is in the range of at least 40 atom% but not more than 80 atom%, there are obtained such advantages that the resulting magnetooptical recording film is excellent in oxidation resistance and has a magnetic easy axis perpendicular to the film.

When Co is incorporated into the magnetooptical recording film, there are observed such phenomena that (i) Curie point increases and (ii) Kerr rotation angle (θk) becomes larger in the thus incorporated recording film, with the result that recording sensitivity can be controlled by adjustment of the amount of Co to be incorporated and, moreover, carrie level of reproducing signals can be increased by the incorporation of Co. From the viewpoint of noise level and C/N ratio, Co/(Fe+Co) ratio (atomic ratio) in the magnetooptical recording film is at least 0 but not more than 0.3, preferably at least 0 but not more than 0.2 and especially at least 0.01 but not more than 0.2.

The magnetooptical recording films used in the present invention as illustrated above will not be subject to change of properties even when they are used repeatedly in recording and erasing information. For example, in the magnetooptical recording film of the present invention having the composition of Pt₁₃Tb₂₈Fe₅₀Co₉, no decrease in C/N ratio is observed even when the recording and erasing of information are carried out repeatedly 100,000 times.

### (ii) Corrosion-resistant metal

The magnetooptical recording films of the present invention contain, as the corrosion-resistant metal, (ii) Pt or Pd, or both of them, and Pt and/or Pd is desirably present in the magnetooptical recording film in an amount of 5-30 atom%, preferably exceeding 10 atom% but not more than 30 atom%, especially exceeding 10 atom% but less than atom% and most suitably at least 11 atom% but not more than 19 atom%.

When the amount of Pt and/or Pd contained in the magnetooptical recording film is at least 5 atom%, especially in excess of 10 atom%, there are obtained such advantages that the resulting recording film is excellent in oxidation resistance, wherein no corrosion occurs even when the recording film is used for a long period of time and no deteriorative change in C/N ratio is observed.

For example, in the magnetooptical recording film of the present invention having the composition of Pt₁₃Tb₂₈Fe₅₀Co₉ (atom%) or Pd₁₂Tb₂₈Fe₅₇Co₃ (atom%), no change in C/N ratio is observed at all even when the recording film is held for 1000 hours under the circumstances of 85% RH and 80°C.

When information is recorded in, or the recorded information is read out from, the magnetooptical recording film containing Pt and/or Pd in an amount as defined above, a sufficiently high C/N ratio is obtained with a small bias magnetic field applied. If a sufficiently high C/N ratio is obtained with a small bias magnetic field, a simplified driving device can be used for driving an optical disc having a magnetooptical recording film, because a magnet for generating bias magnetic field can be minimized in size and, moreover, development of heat from the magnet can be reduced to the fullest extent. Since a sufficiently high C/N ratio is obtained, it becomes easy to design a magnet for magnetic field modulation recording capable of overlight.

### (iii) Rare earth element (RE)

In the magnetooptical recording films of the present invention, a rare earth element (RE) is contained, and the rare earth element used includes Nd, Sm, Pr, Ce, Eu, Gd, Tb, Dy or Ho.

Of the rare earth elements as exemplified above, preferably used are Nd, Pr, Gd, Tb and Dy, and particularly preferred is Tb. These rare earth elements may be used in a combination of two or more elements, and in this case the content of Tb out of the elements used is desirably at least 50 atom%.

From the point of view of obtaining a magnetooptical recording film with a magnetization with easy axis perpendicular to the film, it is desirable that the rare earth elements are present in the magnetooptical recording film in such an amount that RE/(RE+Fe+Co) ratio (atomic ratio) represented by x is 0.15 ≤ x ≤ 0.45, preferably 0.20 ≤ x ≤ 0.4.

In the present invention, it is also possible to contemplate improvements in Curie temperature, compensation temperature, coercive force Hc or Kerr rotation angle θk, or reduction of the cost of production by adding small amounts of various other elements to the magnetooptical recording films.

Such other elements as may be useful in that case include those mentioned below.

The amounts of these elements contained in the magnetooptical recording film is not more than 10 atom% based on all atoms constituting the recording film.

### (I) 3d transition elements other than Fe and Co, for example, including concretely Sc, Ti, V, Cr, Mn, Ni, Cu and Zn.

Of these elements as exemplified above, preferably used are Ti, Ni, Cu and Zn.

### (II) 4d transition elements other than Pd, for example, including concretely Y, Zr, Nb, Mo, Tc, Ru, Rh, Ag and Cd.

Of these elements as exemplified above, preferably used are Zn and Nb.

### (III) 5d transition elements other than Pt, for example, including concretely Hf, Ta, W, Re, Os, Ir, Au and Hg.

Of these elements as exemplified above, preferably used is Ta.

### (IV) Elements belonging to Group III B

Useful elements are concretely B, Al, Ga, In and Tl.

Of these elements as exemplified above, preferably used are B, Al and Ga.

### (V) Elements belonging to Group IV B

Useful elements are concretely C, Si, Ge, Sn and Pb.

Of these elements as exemplified above, preferably used are Si, Ge, Sn and Pb.

### (VI) Elements belonging to Group V B

Useful elements are concretely N, P, As, Sb and Bi.

Of these elements as exemplified above, preferably used is Sb.

### (VII) Elements belonging to Group VI B

Useful elements are concretely S, Se, Te and Po.

Of these elements as exemplified above, preferably used is Te.

In the present invention, furthermore, magnetooptical recording films composed of (i) at least one member selected from 3d transition metals and (iii) at least one element selected from rare earth elements mentioned above can also be used. Such magnetooptical recording films are preferably those of TbFeCo series, wherein preferably the amount of Tb is from 10 to 40 atom%, that of Fe is from 30 to 90 atom% and that of Co is from 0 to 30 atom%. In the present invention, magnetooptical recording films, containing (i) a 3d transition metal and (iii) a rare earth element as mentioned above, may further contain other elements (e.g. elements of (I) - (VII) mentioned above).

By way of wide angle X-ray diffractometry or the like, it is confirmed that the magnetooptical recording film 4 having the composition as defined above is an amorphous film which has a magnetic easy axis perpendicular to the film, Kerr hysteresis loop of which exhibits in most cases favorable square shape, and which is capable of vertical magnetic and magnetooptical recording.

In the present specification, the expression used to the effect that Kerr hysteresis loop exhibits favorable square shape is intended to mean the fact that a ratio θk₂/θk₁ of the Kerr rotation angle at a saturation magnetization (θk₁) in the maximum external magnetic field to the Kerr rotation angle at a remnant magnetization (θk₂) in the magnetic field of zero is more than 0.8.

This magnetooptical recording film 4 has a film thickness of 100-600 Å, preferably 100-400 Å and especially 150-350 Å or thereabouts.

### Metallic film

In the magnetooptical recording medium 1 of the present invention, a metallic film 6 is provided on the aforementioned second protective film 5.

The metallic film 6 used in the invention is composed of an aluminum alloy. This aluminum alloy contains aluminum and at least one element other than aluminum.

Concrete examples of such aluminum alloy as constituting the metallic film 6 include those enumerated below.
Al-Cr alloy (Cr content 0.1-10 atom%),
Al-Cu alloy (Cu content 0.1-10 atom%),
Al-Mn alloy (Mn content 0.1-10 atom%),
Al-Hf alloy (Hf content 0.1-10 atom%),
Al-Nb alloy (Nb content 0.1-10 atom%),
Al-B alloy (B content 0.1-10 atom%),
Al-Ti alloy (Ti content 0.1-10 atom%),
Al-Ti-Nb alloy (Ti content 0.1-5 atom%, Nb content 0.1-5 atom%),
Al-Ti-Hf alloy (Ti content 0.1-5 atom%, Hf content 0.1-10 atom%),
Al-Cr-Hf alloy (Cr content 0.1-5 atom%, Hf content 0.1-10 atom%),
Al-Cr-Ti alloy (Cr content 0.1-5 atom%, Ti content 0.1-10 atom%),
Al-Cr-Zr alloy (Cr content 0.1-5 atom%, Zr content 0.1-10 atom%),
Al-Ti-Nb alloy (Ti content 0.1-5 atom%, Nb content 0.1-5 atom%),
Al-Ni alloy (Ni content 0.1-10 atom%),
Al-Mg alloy (Mg content 0.1-10 atom%),
Al-Mg-Ti alloy (Mg content 0.1-10 atom%, Ti content 0.1-10 atom%),
Al-Mg-Cr alloy (Mg content 0.1-10 atom%, Cr content 0.1-10 atom%),
Al-Mg-Hf alloy (Mg content 0.1-10 atom%, Hf content 0.1-10 atom%),
Al-Se alloy (Se content 0.1-10 atom%),
Al-Zr alloy (Zr content 0.1-10 atom%),
Al-Ta alloy (Ta content 0.1-10 atom%),
Al-Ta-Hf alloy (Ta content 0.1-10 atom%, Hf content 0.1-10 atom%),
Al-Si alloy (Si content 0.1-10 atom%),
Al-Ag alloy (Ag content 0.1-10 atom%),
Al-Pd alloy (Pd content 0.1-10 atom%), and
Al-Pt alloy (Pt content 0.1-10 atom%).

Of the aluminum alloys as exemplified above, those mentioned below are particularly preferred, because they are excellent in corrosion resistance. And the magnetooptical recording media having the metallic film composed of the aluminum alloys are small in dependence on linear velocity.
Aluminum alloys containing 0.1-10 atom% of hafnium,
Aluminum alloys containing 0.1-10 atom% of niobium,
Aluminum alloys containing 0.5-5 atom% of titanium and 0.5-5 atom% of hafnium, the combined content of said titanium and hafnium being 1-5.5 atom%,
Aluminum alloys containing 0.1-5 atom% of chromium and 0.1-9.5 atom% of titanium, the combined content of said chromium and titanium being not more than 10 atom%,
Aluminum alloys containing 0.1-10 atom% of magnesium and 0.1-10 atom% of chromium, the combined content of said magnesium and chromium being not more than 15 atom%,
Aluminum alloys containing 0.1-5 atom% of chromium and 0.1-9.5 atom% of hafnium, the combined content of said chromium and hafnium being not more than 10 atom%,
Aluminum alloys containing 0.1-10 atom% of magnesium and 0.1-10 atom% of hafnium, the combined content of said magnesium and hafnium being not more than 15 atom%,
Aluminum alloys containing 0.1-5 atom% of chromium and 0.1-9.5 atom% of zirconium, the combined content of said chromium and zirconium being not more than 10 atom%,
Aluminum alloys containing 0.1-10 atom% of tantalum and 0.1-10 atom% of hafnium, the combined content of said tantalum and hafnium being not more than 15 atom%,
Aluminum alloys containing 0.5-5 atom% of titanium and 0.5-5 atom% of niobium, the combined content of said titanium and niobium being 1-5.5 atom%, and
Aluminum alloys containing 0.1-10 atom% of magnesium and 0.1-10 atom% of titanium, the combined content of said magnesium and titanium being not more than 15 atom%.
Aluminum alloy containing 0.1-9.5 atom% of hafnium, 0.1-5 atom% of chromium and 0.1-9.5 atom% of titanium based on all atoms constituting aluminum alloy, the combined content of said hafnium, chromium and titanium being not more than 10 atom%.
Aluminum alloy containing 0.1-10 atom% of hafnium, 0.1-10 atom% of magnesium and 0.1-10 atom% of titanium based on all atoms constituting aluminum alloy, the combined content of said hafnium, magnesium and titanium being not more than 15 atom%.
Aluminum alloy containing 0.1-10 atom% of hafnium, 0.1-10 atom% of magnesium and not more than 10 atom% of chromium based on all atoms constituting aluminum alloy, the combined content of said hafnium, magnesium and chromium being not more than 15 atom%.
Aluminum alloy containing 0.1-10 atom% of hafnium, 0.1-10 atom% of magnesium and 0.1-10 atom% of titanium and less than 10 atom% of chromium based on all atoms constituting aluminum alloy, the combined content of said hafnium, magnesium, titanium and chromium being less than 15 atom%.
Aluminum alloy containing 0.1-10 atom% of titanium, 0.1-10 atom% of magnesium and not more than 10 atom% of chromium based on all atoms constituting the aluminum alloy, the combined content of said titanium, magnesium and chromium being not more than 15 atom%.

In the case where the magnetooptical recording film is that of (i) at least one metal selected from 3d transition metals, and (iii) at least one element selected from among rare earth elements, the metallic film composed of the above-mentioned particularly preferred aluminum alloys is used.

The metallic film 6 as illustrated above may be deposited on the second protective film, for example, by the sputtering method or the like using a composite target of the above-mentioned elements or an alloy target containing said elements.

The above-mentioned metallic film may contains one or two or more metals (elements) in addition to metals constituting the metallic film 6. Such metals as referred to above may include, for example, titanium (Ti), hafnium (Hf), niobium (Nb) chromium (Cr), silicon (Si), tantalum (Ta), copper (Cu), tungsten (W), zirconium (Zr), manganese (Mn), magnesium (Mg) and vanadium (V), and the amount of these metals to be contained is usually not more than 5 atom%, preferably not more than 2 atom%. (In that case, however, under no circumstances any metals (elements) out of those exemplified above are contained, even when their amount is in the range as defined above, in the metallic film 6 if said metals (elements) have already been present in the metallic film 6). For example, when the aluminum alloy constituting the metallic film 6 is Al-Ti alloy or Al-Ti-Hf alloy, no titanium (Ti) out of the above-exemplified metals (elements) is contained in this aluminum alloy.)

The metallic film 6 used in the present invention desirably has a film thickness of 100-5000 Å, preferably 500-3000 Å and especially 700-2000Å.

The metallic film used in the present invention functions as a good heat conductor layer, and by the presence of this metallic film in the magnetooptical recording medium, the center portion of pits recorded in the recording film is prevented from excessive heating by the recording beam applied thereto and, as the result it is considered that dependence on linear velocity of the recording power used is made small.

In the present invention, an overcoat layer may be provided on the metal film. An UV-ray polymerization resin, for example, an acryl type UV-ray polymerization resin is preferably used as an overcoating agent, and the resultant coating has preferably a thichness of 1-100 µm. The substrate may also be coated with a top coat on the side opposite to the protective film.

The double-sided magnetooptical recording media of the present invention are illustrated hereinafter.

As shown, for example, in Fig. 2, the double-sided magnetooptical recording medium 20 of the invention has such a structure that a first magnetooptical recording medium having laminated first protective film (11a), a magnetooptical recording film (12a), a second protective film (13a) and a metallic film (14a) on a substrate (10a) in that order and a second magnetooptical recording medium having laminated a first protective film (11b), a magnetooptical recording film (12a), a second protective film (13b) and a metallic film (14b) on a substrate (10b) in that order are joined together with an adhesive layer 15 interposed between the two recording films so that the metallic film (14a) of the first magnetooptical recording medium and the metallic film (14b) of the second magnetooptical recording medium are faced with each other.

The metallic film (14a) and/or the metallic film (14b) may also be coated with the overcoat to improve long-time reliance of the magnetooptical recording medium, and in this case the first magnetooptical recording medium and the second magnetooptical recording medium are joined together with the adhesive layer 15 so that the overcoats are faced with each other.

The substrates 10a and 10b, the first protective films 11a and 11b, the magnetooptical recording films 12a and 12b, the second protective films 13a and 13b and the metallic films 14a and 14b used in the above-mentioned double sided magnetooptical recording medium are the same as those illustrated hereinbefore.

### Adhesive layer

In the double-sided magnetooptical recording medium 20 of the present invention, the metallic film 14a of the first magnetooptical recording medium and the metallic film 14b are joined together with the adhesive layer 15.

The adhesive layer 15 may be formed from hot-melt adhesives such as polyolefin, EVA, synthetic rubber, polyester and polyamide, or reactive adhesives such as resorcinol, cyanoacrylate, epoxy, urethane and ultraviolet curing acrylate. In the present invention, however, preferably useful are hot-melt adhesive.

Of the hot-melt adhesives as illustrated above, preferably useful in the invention are polyolefin hot-melt adhesives having a softening point of at least 130°C, preferably that exceeding 140°C and especially that of at least 141°C.

By using such high softening hot-melt adhesive as mentioned above in the double-sided magnetooptical recording medium of the invention, there obtained such advantages that even when this double-sided magnetooptical recording medium is used for a long period of time under the circumstances of high temperature and humidity, the two magnetooptical recording media joined together will not come loose, and deformation such as warping in the double-sided magnetooptical recording medium, if any, is small.

Preferably useful as the hot-melt adhesives having a softening point of at least 130°C are polyolefin hot-melt adhesives containing polyolefins (A), styrene resins (B) and tackifiers (C).

The polyolefins (A) used include ethylene/propylene/α-olefin random terpolymers, ethylene/propylene random copolymer and polyisobutylene.

The α-olefin constituting the above-mentioned random terpolymer includes C₄-C₂₀ α-olefins, particularly preferred are 1-butene and 4-methyl-1-pentene. The styrene resins (B) used include polymers or copolymers containing styrene or styrene derivatives as the constituent thereof, such as polystyrene, styrene/α-methylstyrene copolymers and stylene/α-methylstyrene/vinyl toluene copolymers. Of these styrene resins, particularly preferred is polystyrene. The tackifiers (C) used include such petroleum resins as aromatic petroleum resins (e.g. C₉ petroleum resin), aliphatic petroleum resins (C₅ petroleum resin), aromaticaliphatic copolymer petroleum resins (C₉-C₅ copolymer resin) and aliphatic cyclic resins. Of these tackifiers, desirably used are petroleum resins having a number average molecular weight of not more than 3000, particularly, 500-3000, and a softening point of 80-150°C. And aliphatic cyclic resins having a weight average molecular weight of not more than 5000 preferably 50-3000.

In the polyolefin hot-melt adhesives as illustrated above, the proportion of the constituent (A) is 1-60% by weight, preferably 5-40% by weight, that of the constituent (B) is 1-30% by weight, preferably 5-20% by weight, and that of the constituent (C) is 30-95% by weight, preferably 50-90% by weight.

The double-sided magnetooptical recording media are also excellent in oxidation resistance, free from derterioration of magnetooptical recording characteristics even when used for an extended period of time, high in C/N ratio, broad in recording power margin and small in dependence on livear velocity of recording sensitivity. In addition, the double-sided magnetooptical recording medium are free from warps.

The first protective film, magnetooptical recording film, second protective film and metallic film as illustrated hereinbefore may be deposited respectively on the substrate by the known method such as sputtering, electron beam deposition, vacuum deposition or ion plating.

### EFFECT OF THE INVENTION

Because of the specific film structure and film composition as illustrated hereinbefore, the magnetooptical recording media of the present invention are excellent in oxidation resistance, free from deterioration of magnetooptical recording characteristics even when used for an extended period of time, high in C/N ratio, broad in recording power margin an small in dependence on linear velocity of recording sensitivity. In particular, the magnetooptical recording media of the invention are broad in recording power margin, because the magnetooptical recording media have specific four films laminated structure [namely a structure of substrate/a first protective film (SiNx)/a specific recording layer/a second protective film (SiNx)/an aluminum alloy film] and have a metallic film composed of the aluminum alloy film. Further, the magnetooptical recording media are small in dependence on linear velocity of recording sensitivity, because the magnetooptical recording media have the metallic film composed of an aluminum alloy.

Furthermore, when the substrate composed of the specific cycloolefin random copolymer as aforementioned is used, an increase in adhesion between the substrate and the first protective film can be obtained.

In addition, the double-sided magnetooptical recording media have the excellent properties as listed above and are excellent in mechanical properties such as free from warps.

The present invention is illustrated below with reference to examples, but it should be construed that the invention is in no way limited to those examples.

The term "optimum recording power" used in the following Examples designates a recording power with which writing signals at a frequency of 1 MHz and a duty factor of 50% are recorded and which makes minimum the secondary harmonics of signals reproduced from the recorded signals. Recording media show a lower degree of dependence on the linear velocity when the information recording media show smaller difference of the optimum recording powers determined at different linear velocities.

### Example 1

On a substrate (having a thickness of 1.2 mm) composed of an amorphous polyolefin obtained by copolymerizing ethylene and 1,4,5,8-dimethano-1,2,3,4,4a,5,8,8a-octahydronaphthalene (structural formula: 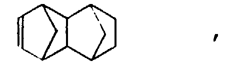 hereinafter called DMON for short) [ethylene content 59 mol% and DMON content 41 mol% as measured by ¹³C-NMR analysis, an intrinsic viscosity [η], as measured in decalin at 135°C, of 0.42 dl/g, and a softening temperature (TMA) of 154°C] was deposited a Si₃N₄ film as a first protective film to a thickness of 1000 Å by the sputtering method using a Si₃N₄ target.

On this Si₃N₄ film was deposited a recording film composed of Pt₉Tb₂₉Fe₅₈Co₄ represented in terms of atom% to a thickness of 270Å by the sputtering method using a composite target prepared by loading a target composed of Fe and Co with Pt and Tb chips.

On this Pt₉Tb₂₉Fe₅₈Co₄ film was further deposited a Si₃N₄ film as a second protective film to a thickness of 160 Å by the sputtering method using a Si₃N₄ target.

On this Si₃N₄ film was then deposited an aluminum alloy film composed of Al₉₆Cr₂Hf₂ represented in terms of atom% as a metallic film to a thickness of 1800 Å by the sputtering method using a composite target composed of Al-Cr-Hf.

Characteristics of the magnetooptical recording medium thus obtained were determined in the following manner.
Optimum recording power: Evaluation of the optimum recording power was conducted, wherein information was recorded with a recording frequency of 1 MHz and a duty ratio of 50%, and the information recorded was reproduced with a reproducing laser power of 1 mW at a linear velocity of 5.7 m/s and 11.3 m/s.
Power margin: The range as determined, within which a maximum value of C/N measured under the following conditions has decreased by 3 dB, was taken as the power margin. Namely, the power margin means the recording power range within which the C/N value of no less than C/N max-3 dB is obtained.
C/N (dB): C/N (dB) was determined by using a recording frequency of 3.7 MHz, a duty ratio of 33.3% and reading (reproducing) laser power of 1.0 mW.
ΔC/N (dB) : The magnetooptical recording medium was kept in an atmosphere of 80°C and relative humidity of 85% for 1000 hours as a lifetest and then ΔC/N ratio was measured. ΔC/N ratio = (C/N ratio after the lifetest) - (C/N ratio before the lifetest)

The optimum recording power, power margin, C/N ratio and ΔC/N ratio in Examples described hereinafter were determined by the procedure described above.

Evaluation of adhesion between the substrate and the first protective film (enhancing film) was conducted in the following manner.

### Adhesion test [Cross-cut adhesion test (JIS K5400)]:

On the protective film deposited on the substrate of a specimen were drawn in a checkerboard-like pattern parallel lines at intervals of 1 mm so that 100 squares per 1 cm² were formed on the specimen.

The adhesion was evaluated by subjecting the thus treated specimen to peeling test using a scotch tape in the usual way.

Results obtained are shown in Table 1.

### Example 2

Example 1 was repeated except that the Si₃N₄ film used as the second protective film had a film thickness of 240 Å.

Results obtained are shown in Table 1.

### Example 3

On the same substrate as used in Example 1 was deposited a Si₃N₄ film as a first protective film by the sputtering method to a thickness of 1000 Å using a Si₃N₄ target.

On this Si₃N₄ film was deposited a recording film composed of Pt₉Tb₂₉Fe₅₈Co₄ represented in terms of atom% to a film thickness of 360 Å by the sputtering method using a composite target prepared by loading a target composed of Fe and Co with Pt and Tb chips.

On this Pt₉Tb₂₉Fe₅₈Co₄ film was further deposited a Si₃N₄ film as a second protective film to a film thickness of 250 Å by the sputtering method using a Si₃N₄ target.

Subsequently, on this Si₃N₄ film was deposited an aluminum alloy film composed of Al₉₄Mg₄Hf₂ represented in terms of atom% to a film thickness of 1500 Å by the sputtering method using a composite target of Al-Mg-Hf.

Various characteristics of the magnetooptical recording medium thus obtained were determined in the same manner as in Example 1.

Results obtained are shown in Table 1.

### Example 4

Example 3 was repeated except that the Si₃N₄ film used as the second protective film had a film thickness of 350 Å.

Results obtained are shown in Table 1.

### Example 5

On the same substrate as used in Example 1 was deposited a Si₃N₄ film as a first protective film to a film thickness of 1100 Å by the sputtering method using a Si₃N₄ target.

On this Si₃N₄ film was deposited a recording film composed of Pt₁₀Tb₃₀Fe₅₈Co₂ represented in terms of atom% to a film thickness of 300 Å by the sputtering method using a composite target prepared by loading a target composed of Fe and Co with Pt and Tb chips.

On this Pt₁₀Tb₃₀Fe₅₈Co₂ film was further deposited a Si₃N₄ film as a second protective film to a film thickness of 220 Å by the sputtering method using a Si₃N₄ target.

Subsequently on this Si₃N₄ film was deposited an aluminum alloy film composed of Al₉₆Ti₂Hf₂ represented in terms of atom% to a film thickness of 1500 Å by the sputtering method using a composite target of Al-Ti-Hf.

Various characteristics of the magnetooptical recording medium thus obtained were determined in the same manner as in Example 1.

Results obtained are shown in Table 1.

### Example 6

Example 5 was repeated except that the Si₃N₄ film used as the second protective film had a film thickness of 120 Å.

Results obtained are shown in Table 1.

### Example 7

On the same substrate as used in Example 1 was deposited a Si₃N₄ film as a first protective film to a film thickness of 1100 Å by the sputtering method using a Si₃N₄ target.

On this Si₃N₄ film was deposited a recording film composed of Pt₁₀Tb₃₀Fe₅₈Co₂ represented in terms of atom% to a film thickness of 300 Å by the sputtering method using a composite target prepared by loading a target composed of Fe and Co with Pt and Tb chips.

On this Pt₁₀Tb₃₀Fe₅₈Co₂ film was further deposited a Si₃N₄ film as a second protective film to a film thickness of 180 Å by the sputtering method using a Si₃N₄ target.

Subsequently, on this Si₃N₄ film was deposited an aluminum alloy film composed of Al₉₄Mg₄Cr₂ represented in terms of atom% to a film thickness of 1500 Å by the sputtering method using a composite target of Al-Mg-Cr.

Various characteristics of the magnetooptical recording medium thus prepared were determined in the same manner as in Example 1.

Results obtained are shown in Table 1.

### Example 8

Example 7 was repeated except that the Si₃N₄ film used as the second protective film had a film thickness of 320 Å.

Results obtained are shown in Table 1.

In the Table 1, 100/100 means that, among 100 pieces, 100 pieces remain after the peeling test.

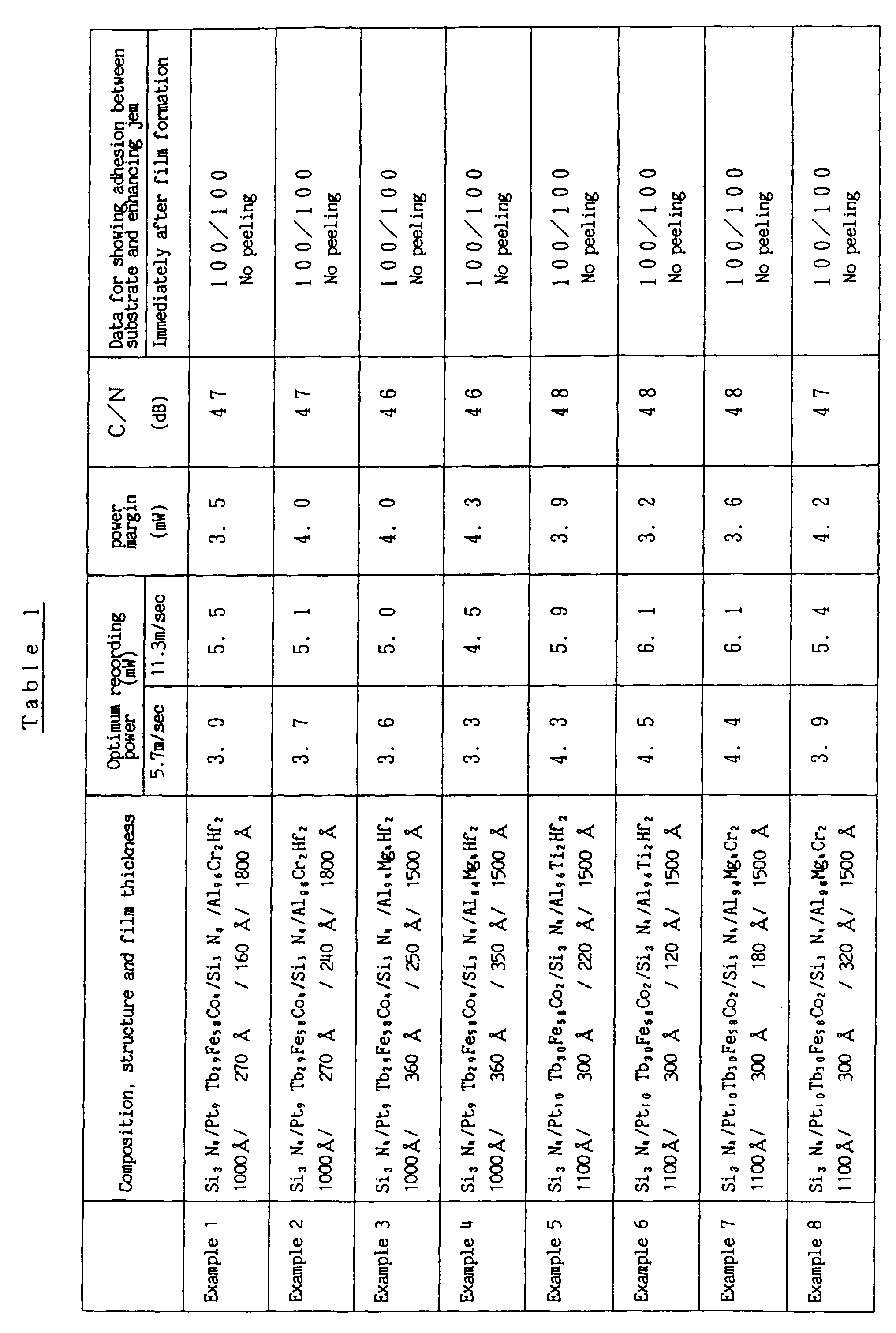

In addition, results of the lifetest are shown in Table 2.

**Table 2**

| | C/N ratio | ΔC/N ratio |
|---|---|---|
| Example 1 | 47 | 0 |
| Example 2 | 47 | 0 |
| Example 3 | 46 | 0 |
| Example 4 | 46 | 0 |
| Example 5 | 48 | 0 |
| Example 6 | 48 | 0 |
| Example 7 | 48 | 0 |
| Example 8 | 47 | 0 |

### Example 9

An amorphous polyolefin (A) of ethylene and DMON (said polyolefin (a) having the ethylene content, as measured by ¹³C-NMR analysis, of 59 mol%, an intrinsic viscosity [η], as measured in decalin at 135°C, of 0.42 dl/g, and a softening temperature (TMA) of 154°C) and an amorphous polyolefin (B) of ethylene and DMON (said copolymer (B) having the ethylene on content, as measured by ¹³C-NMR analysis, of 89 mol%, an intrinsic viscosity [η], as measured in decalin at 135°C, of 0.44 dl/g, and a softening temperature (TMA) of 39°C) were poured in amounts of 400 g and 4 g, respectively, (weight ratio: (A)/(B) = 100/1) into 8 liters of cyclohexane and dissolved with stirring at about 50°C. The homogeneous solution thus obtained was poured into 24 liters of acetone to deposit a blend of (A)/(B). The blend thus obtained was dried at 120°C overnight under reduced pressure.

The (A)/(B) blend thus obtained was incorporated with, as stabilizers, tetrakis methylene-3-(3,5-di-t-butyl-4-hydroxyphenyl propionate methane, zinc stearate and glycerin monostearate in amounts, based on the sum total of the resins (A) and (B), of 0.5% by weight, 0.05% by weight and 0.5% by weight, respectively. The resulting mixture was pelletized at 23°C with an extruder of 20 mm⌀ (L/D = 20) and then molded into an optical disc substrate of a 1 mm thick and 130 mm⌀ using an injection molding machine.

On the substrate obtained above was deposited a Si₃N₄ film as a first protective film to a film thickness of 1000 Å by the sputtering method using a Si₃N₄ target.

On this Si₃N₄ film was deposited a recording film composed of Pt₉Tb₂₉Fe₅₈Co₄ represented in terms of atom% to a film thickness of 270 Å by the sputtering method using a composite target prepared by loading a target composed of Fe and Co with chips of Pt and Tb.

On this Pt₉Tb₂₉Fe₅₈Co₄ film was further deposited a Si₃N₄ film as a second protective film to a film thickness of 160 Å by the sputtering method using a Si₃N₄ target.

Subsequently, on this Si₃N₄ film was deposited an aluminum alloy film composed of Al₉₆Cr₂Hf₂ represented in terms of atom% to a film thickness of 1800 Å by the sputtering method using a composite target of Al-Cr-Hf. Adhesion between the substrate and the enhancing film of the thus obtained magnetooptical recording medium were evaluated.

Results obtained are shown in Table 3.

Further various characteristics of the magnetooptical recording medium thus obtained were determined in the same manner as in Example 1.

Results obtained are shown in Table 4.

### Example 10

Example 9 was repeated except that the Si₃N₄ film used as the second protective film had a film thickness of 240 Å. The magnetooptical recording medium thus obtained was evaluated in the same manner as in Example 9.

Results obtained are shown in Table 3 and Table 4.

### Example 11

On the same substrate as used in Example 9 was deposited a Si₃N₄ film as a first protective film to a film thickness of 1000 Å by the sputtering method using a Si₃N₄ target.

On this Si₃N₄ film was deposited a recording film composed of Pt₉Tb₂₉Fe₅₈Co₄ represented in terms of atom% to a film thickness of 360 Å by the sputtering method using a composite target prepared by loading a target composed of Fe and Co with Pt and Tb chips.

On this Pt₉Tb₂₉Fe₅₈Co₄ film was further deposited a Si₃N₄ film as a second protective film to a film thickness of 250 Å by the sputtering method using a Si₃N₄ target.

Subsequently, on this Si₃N₄ film was then deposited an aluminum alloy film composed of Al₉₆Mg₄Hf₃ represented in terms of atom% to a film thickness of 1500 Å by the sputtering method using a composite target of Al-Mg-Hf.

Adhesion between the substrate and the enhancing film of the thus obtained magnetooptical recording medium was evaluated in the same manner as in Example 9.

Results obtained are shown in Table 3 and Table 4.

### Example 12

Example 11 was repeated except that the Si₃N₄ film used as the second protective film had a film thickness of 350 Å.

Results obtained are shown in Table 2.

### Example 13

On the same substrate as used in Example 9 was deposited a Si₃N₄ film as a first protective film to a film thickness of 1100 Å by the sputtering method using a Si₃N₄ target.

On this Si₃N₄ film was deposited a recording film composed of Pt₁₀Tb₃₀Fe₅₈Co₂ represented in terms of atom% to a film thickness of 300 Å by the sputtering method using a composite target prepared by loading a target composed of Fe and Co with Pt and Tb chips.

On this Pt₁₀Tb₃₀Fe₅₈Co₂ film was further deposited a Si₃N₄ film as a second protective film to a film thickness of 220 Å by the sputtering method using a Si₃N₄ target.

Subsequently, on this Si₃N₄ film was deposited an aluminum alloy film composed of Al₉₆Ti₂Hf₂ represented in terms of atom% to a film thickness of 1500 Å by the sputtering method using a composite target of Al-Ti-Hf.

Adhesion between the substrate and the enhancing film of the magnetooptical recording medium thus obtained was evaluated in the same manner as in Example 9.

Results obtained are shown in Table 3 and Table 4.

### Example 14

Example 13 was repeated except that the Si₃N₄ film used as the second protective film had a film thickness of 120 Å.

Results obtained are shown in Table 3 and Table 4.

### Example 15

On the same substrate as used in Example 9 was deposited a Si₃N₄ film as a first protective film to a film thickness of 1100 Å by the sputtering method using a Si₃N₄ target.

On this Si₃N₄ film was deposited a recording film composed of Pt₁₀Tb₃₀Fe₅₈Co₂ represented in terms of atom% to a film thickness of 300 Å by the sputtering method using a composite target prepared by loading a target composed of Fe and Co with Pt and Tb chips.

On this Pt₁₀Tb₃₀Fe₅₈Co₂ film was further deposited a Si₃N₄ film as a second protective film to a film thickness of 180 Å by the sputtering method using a Si₃N₄ target.

Subsequently, on this Si₃N₄ film was deposited an aluminum alloy film composed of Al₉₆Mg₄Cr₂ represented in terms of atom% to a film thickness of 1500 Å by the sputtering method using a composite target of Al-Mg-Hf.

Adhesion between the substrate and the enhancing film of the magnetooptical recording medium was evaluated in the same manner as in Example 9.

Results obtained are shown in Table 3 and Table 4.

### Example 16

Example 15 was repeated except that the Si₃N₄ film used as the second protective film had a film thickness of 320 Å.

Results obtained are shown in Table 3 and Table 4.

**Table 3**

| | Results obtained in cross-cut adhesion test | |
|---|---|---|
| | Immediately after film formation | 85°C/85%RH, After 100hr |
| Examples 9 - 16 | 100/100 No peeling | 100/100 No peeling |

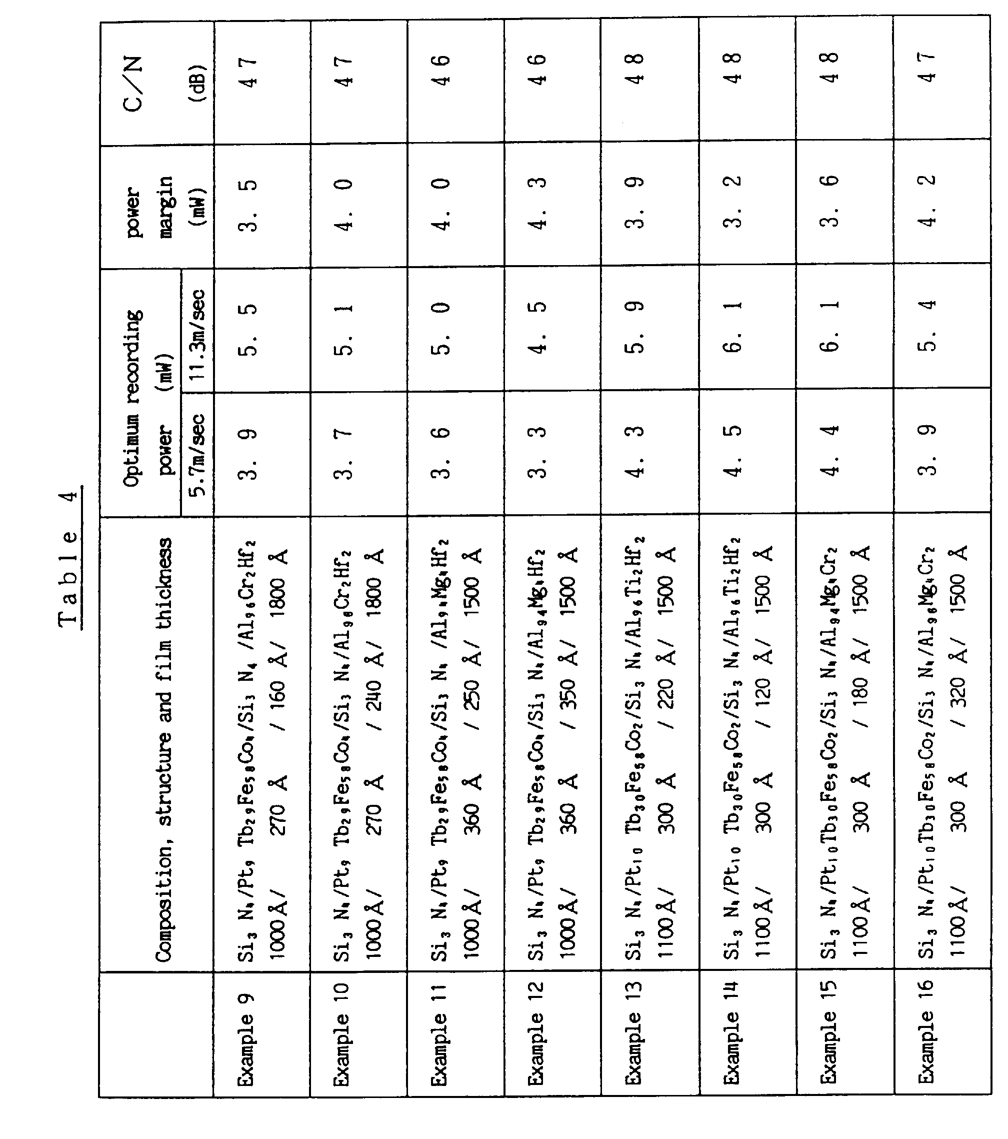

### Example 17

On the same substrate as used in Example 1 were consecutively deposited, by sputtering, a Si₃N₄ film as a first protective film having a thickness of 1000 Å, a Pt₉Tb₂₉Fe₅₈Co₄ (atom%) film as a magnetooptical recording film having a thickness of 270 Å, a Si₃N₄ film as a second protective film having a thickness of 160 Å and an Al₉₆Cr₂Hf₂ (atom%) film as a metallic film having a thickness of 1800 Å to obtain a megnetooptical recording medium.

Subsequently, the metallic films of two of these magnetooptical recording medium were coated, by a roll coater, with a hot melt adhesive (composition: 21% by weight of an ethylene/propylene/1-butene ternary copolymer, 10% by weight of a polystyrene having a Tg of 110°C and MFR of 25 g/10 min, and 69% by weight of a petroleum resin having a number average molecular weight of 1500) having a softening temperature of 145°C.

Two of the magnetoopotical recording medium thinly coated with the hot melt adhesive were placed in such a manner that both metallic layers of the two medium faced each other, and bonded together by a cold pressing machine to obtain a double-sided recording type magnetooptical recording medium.

Results are shown in Table 5.

### Examples 18-24

Example 17 was repeated except that the composition of the magnetooptical recording film and the metallic film and/or the thickness of the constituent films were altered as described in Table 5 to obtain a double-sided recording type magnetooptical recording medium.

The recording medium was tested, and results obtained are shown in Table 5. The composition of the magnetooptical recording films and the metallic films is represented in terms of atom%.

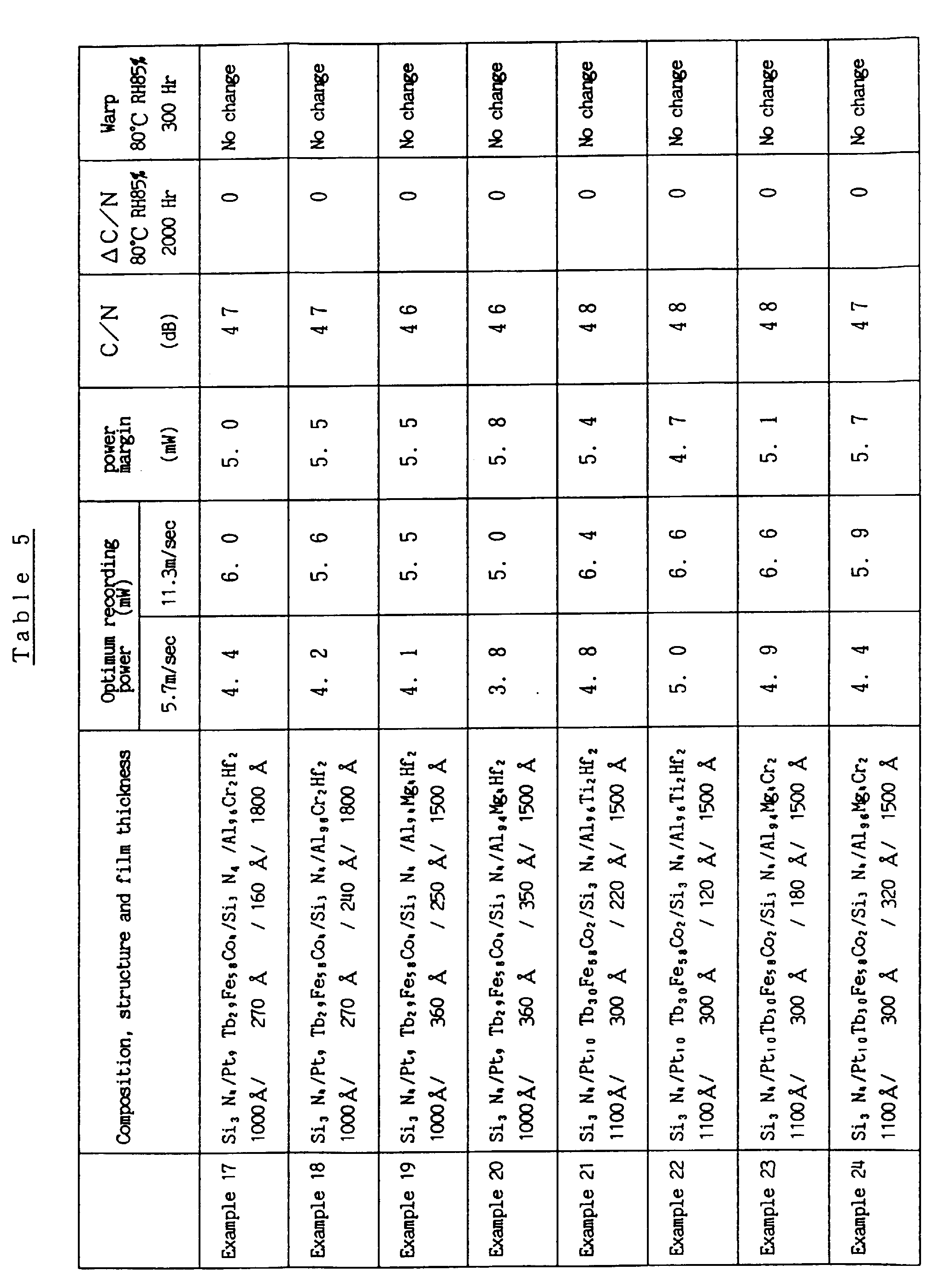

### Examples 25-30

Example 1 was repeated except that the composition of the protective films, magnetooptical recording film and/or metallic film, and the thickness of the constituent films were altered as described in Table 6, and that a polycarbonate substrate was used in Example 28 in place of the ethylene/DMON copolymer substrate to obtain single-sided magnetooptical recording media.

The recording media were tested, and results obtained were shown in Table 6. The composition of the protective films is represented in terms of an atomic ratio, and that of the magnetooptical recording films and metallic films is represented in terms of atom%.

The refractive index of the protective film used in Example 26 was 2.1 and that of the protective film used in Example 27 was 1.9.

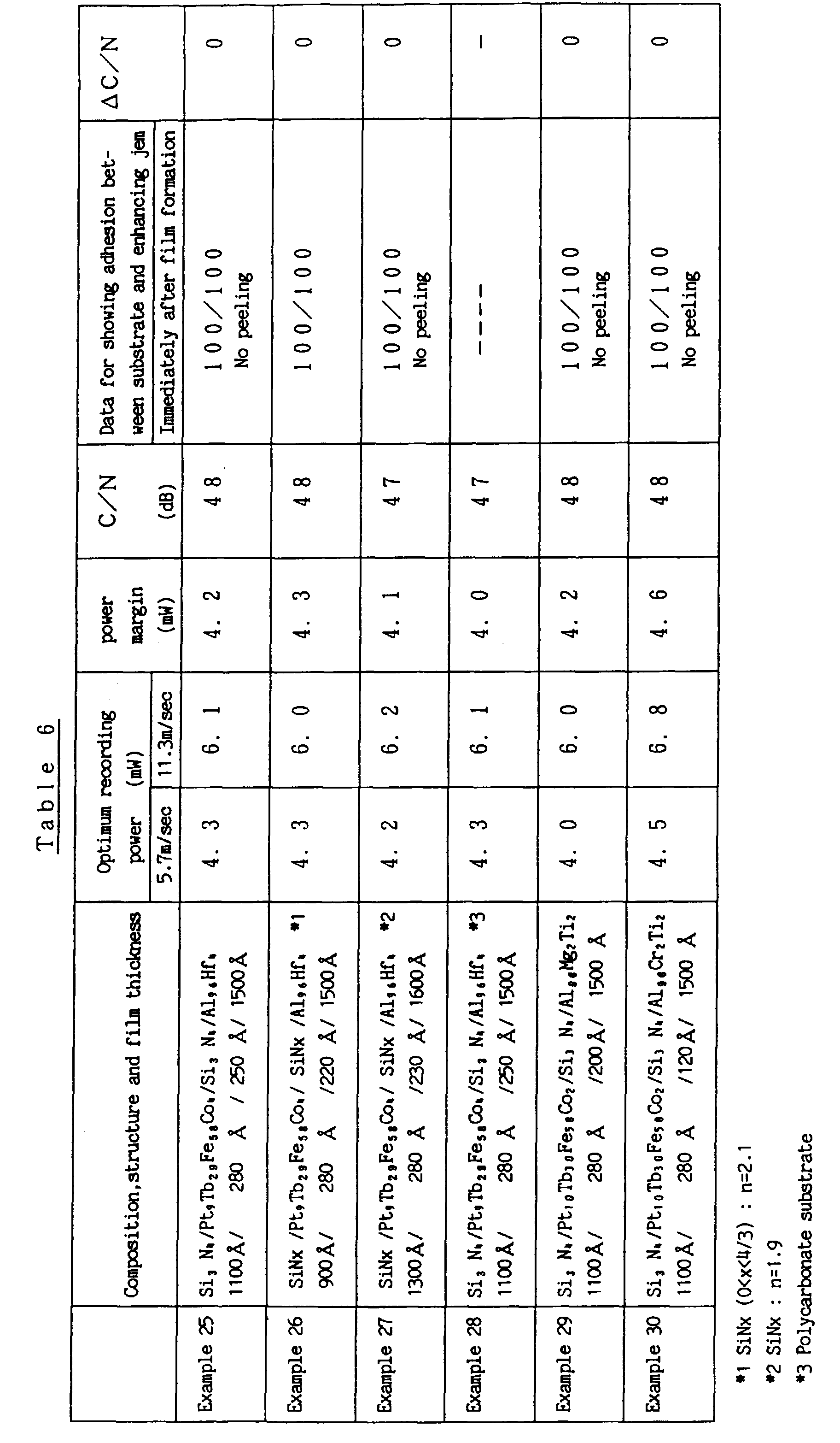

### Examples 31

The metallic film of a magnetooptical recording medium obtained by repeating Example 5 was coated, by a roll coater, with an acrylic UV-ray polymerization resin (trade name of SD101, from Dainippon Ink Corporation) to form an overcoat having a thickness of 10 µm.

The obtained magnetooptical recording medium was tested by a procedure similar to that in Example 1. A Byte Error Rate (BER) was determined after 20 cycles of a heat cycle test in which the recording medium was left in an atmosphere changing its temperature from 65°C to -40°C in 24 hours (1 cycle).

The recording medium showed an optimum recording power of 4.8 mW at a linear velocity of 5.7 m/sec and 6.4 mW at a linear velocity of 11.3 m/sec, respectively, a power margin of 5.1 mW, a C/N ratio of 48 dB, and a BER of 1x10⁻⁵ initially and 1x10⁻⁵ after the 20 cycles of the heat cycle test.

### Examples 32

The metallic film of a magnetooptical recording medium obtained by repeating Example 5 was coated, by a roll coater, with an acrylic UV-ray polymerization resin (trade name of SD101, from Dainippon Ink Corporation) to form an overcoat having a thickness of about 1.0 µm. Two of the magnetooptical recording media were bonded together with some adhesive and by the same procedure as used in Example 17 to obtain a double-sided recording type magnetooptical recording medium.

The obtained recording medium showed an optimum recording power of 4.9 mW at a linear velocity of 5.7 m/sec and 6.5 mW at a linear velocity of 11.3 m/sec, respectively, a power margin of 5.5 mW, a C/N ratio of 48 dB, a ΔC/N ratio of 0, no warp, and a BER of 1x10⁻⁵ initially and 1x10⁻⁵ after 20 cycles of the heat cycle test described in Example 31.

### Examples 33

Example 1 was repeated except that a magnetooptical recording film composed of Tb₃₀Fe₆₆Co₄ was used in place of the magnetooptical recording film composed of Pt₉Tb₂₉Fe₅₈Co₄, the compositon of both films being represented in terms of atom%.

The obtained magnetooptical recording medium was tested, and the same optimum recording power, power margin and adhesion values as Example 1 were obtained, and a C/N ratio of 49 and a ΔC/N ratio of -6 were obtained.

### Examples 34

Example 21 was repeated except that a magnetooptical recording film composed of Tb₃₀Fe₆₆Co₄ was used in place of the magnetooptical recording film composed of Pt₁₀Tb₃₀Fe₅₈Co₂, the composition of both films being represented in terms of atom%.

The obtained magnetooptical recording medium was tested, and the same optimum recording power, power margin and adhesion values as Example 1 were obtained, and a C/N ratio of 48.5 and a ΔC/N ratio of -5 were obtained.

## Claims

1. A magnetooptical recording medium having, on a substrate, a first protective film, a magnetooptical recording film, a second protective film and a metallic film in that order, wherein:
the first and second protective films are each composed of SiNx in which x is 0 < x ≤ ⁴/3; and
the magnetooptical recording film is composed of an amorphous alloy film which has a magnetic easy axis perpendicular to the film and comprises (i) at least one metal selected from among 3d transition metals, (ii) at least one metal selected from corrosion-resistant metals and (iii) at least one element selected from among rare earth elements, the content of said corrosion-resistant metal being 5-30 atom% based on all atoms constituting the recording film,
characterized in that the metallic film is composed of an aluminum alloy.

2. A magnetooptical recording medium having, on a substrate, a first protective film, a magnetooptical recording film, a second protective film and a metallic film in that order, wherein:
the first and second protective films are each composed of SiNx wherein x is 0 < x ≤ ⁴/3; and
the magnetooptical recording film is composed of an amorphous alloy film which has a magnetic easy axis perpendicular to the film and comprises (i) at least one metal selected from among 3d transition metals, and (ii) at least one element selected from among rare earth elements,
characterized in that
the metallic film is composed of an aluminum alloy.

3. A double-sided magnetooptical recording medium wherein a first magnetooptical recording medium having, on a substrate, the first protective film, the magnetooptical recording film, the second protective film and the metallic film as described in claim 1 in that order and a second magnetooptical recording medium having, on a substrate, the first protective film, the magnetooptical recording film, the second protective film and the metallic film as described in claim 1 in that order are joined together through an adhesive layer so that the metallic film of the first magnetooptical recording medium and the metallic film of the second magnetooptical recording medium face each other.

4. The magnetooptical recording medium as claimed in claim 1, 2 or 3 wherein the first protective film has a film thickness of 400-2000 Å and the second protective film has a film thickness of 400-1000 Å.

5. The magnetooptical recording medium as claimed in claim 1 or 3 wherein the magnetooptical recording film is composed of 20-90 atom% of a 3d transition metal, 5-30 atom% of a corrosion-resistant metal and 5-50 atom% of a rare earth element.

6. The magnetooptical recording medium as claimed in claim 1 or 3 wherein the corrosion-resistant metal is Pt and/or Pd.

7. The magnetooptical recording medium as claimed in claim 1, 2 or 3 wherein the magnetooptical recording film has a film thickness of 100-600 Å.

8. The magnetooptical recording medium as claimed in claim 1, 2 or 3 wherein the metallic film has a film thickness of 100-5000 Å.

9. The magnetooptical recording medium as claimed in claim 1, 2 or 3 wherein the substrate is composed of a cycloolefin random copolymer having an intrinsic viscosity [η] of 0.05-10 dl/g as measured in decalin at 135°C, said random copolymer being a copolymer of ethylene and at least one cycloolefin represented by the following formula [I] or [II]. 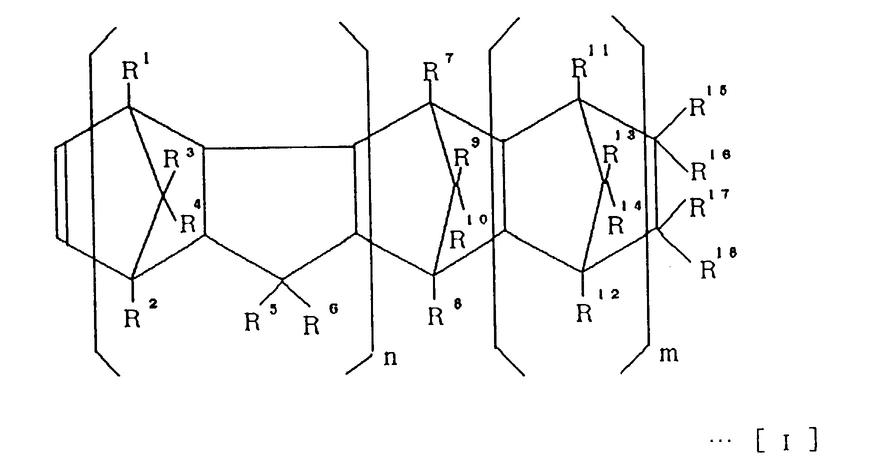 wherein n is 0 (zero) or 1, m is 0 (zero) or a positive integer, R¹ - R¹⁸ are individually hydrogen, halogen or hydrocarbon group, R¹⁵ - R¹⁸ may, linking together, form a mono- or polycyclic ring which may have a double bond, and R¹⁵ together with R¹⁶ or R¹⁷ together with R¹⁸ may form an alkylidene group. 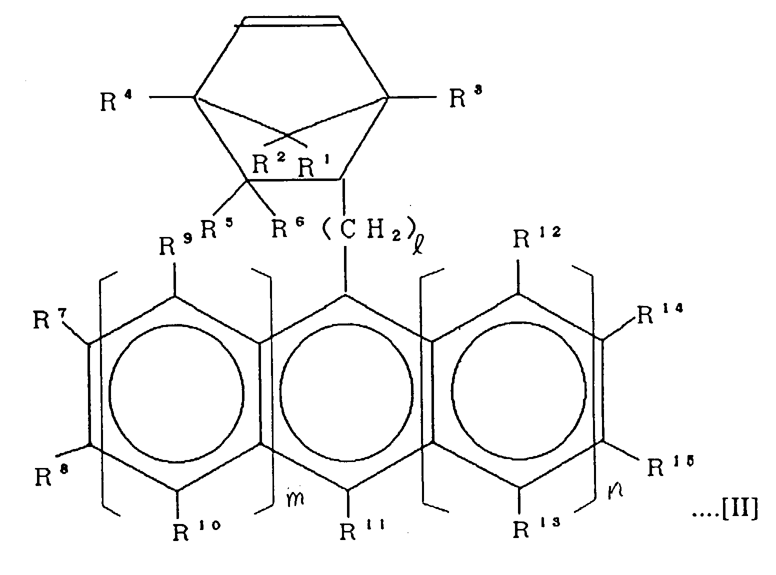 wherein 1 is 0 (zero) or an integer of at least 1, m and n are each 0 (zero), 1 or 2, R¹-R¹⁵ is individually an atom or group selected from the group consisting of hydrogen, halogen, aliphatic hydrocarbon, aromatic hydrocarbon and alkoxy, and R⁵ (or R⁶) and R⁹ (or R⁷) may be linked together through an alkylene group of 1-3 carbon atoms or may be linked together directly without through any group.

10. The magnetooptical recording medium as claimed in claim 9 wherein the substrate is composed of a cycloolefin random copolymer [A] having an intrinsic viscosity [η], as measured in decalin at 135°C, of 0.05-10 dl/g and a softening temperature (TMA) of at least 70°C.

11. The magnetooptical recording medium as claimed in claim 1, 2 or 3 wherein the substrate is composed of a cycloolefin random copolymer [A] as defined in claim 10, and a cycloolefin random copolymer [B] having an intrinsic viscosity [η], as measured in decalin at 135°C, of 0.05-5 dl/g and a softening temperature (TMA) of less than 70°C, said random copolymer being a copolymer of (a) ethylene and (b) at least one cycloolefin selected from the group consisting of unsaturated monomers represented by the formula [I] or [II] as described in claim 9.

12. The double-sided magnetooptical recording medium as claimed in claim 3 wherein the first magnetooptical recording medium and/or the second magnetooptical recording medium further has an overcoat on the metallic layer.

13. The magnetooptical recording medium as claimed in claim 1 wherein the magnetoopticcal recording medium further has an overcoat on the metallic layer.

## Patentansprüche

1. Magnetoptisches Aufzeichnungsmedium mit einem ersten Schutzfilm, einem magnetoptischen Aufzeichnungsfilm, einem zweiten Schutzfilm und einem metallischen Film auf einem Substrat in dieser Reihenfolge, worin:
der erste und der zweite Schutzfilm jeweils aus SiNx besteht, worin x gleich 0 < x ≤ ⁴/3 ist; und der magnetopische Aufzeichnungsfilm aus einem amorphen Legierungsfilm aufgebaut ist, der eine Achse der leichten Magnetisierung senkrecht zum Film hat, und
(i) mindestens ein Metall, ausgewählt aus 3d-Übergangsmetallen, (ii) mindestens ein Metall, ausgewählt aus korrosionsbeständigen Metallen, und
(iii) mindestens ein Element, ausgewählt aus Seltenerdelementen umfaßt, wobei der Gehalt des korrosionsbeständigen Metalls 5 - 30 Atomprozent, bezogen auf alle Atome, die den Aufzeichnungsfilm bilden, ausmacht,
dadurch **gekennzeichnet,** daß der metallische Film aus einer Aluminiumlegierung besteht.

2. Magnetoptisches Aufzeichnungsmedium mit einem ersten Schutzfilm, einem magnetoptischen Aufzeichnungsfilm, einem zweiten Schutzfilm und einem metallischen Film auf einem Substrat in dieser Reihenfolge, worin:
der erste und der zweite Schutzfilm aus SiNx besteht, worin x gleich 0 < x ≤ ⁴/3 ist; und der magnetopische Aufzeichnungsfilm aus einem amorphen Legierungsfilm aufgebaut ist, der eine Achse der leichten Magnetisierung senkrecht zum Film hat, und
(i) mindestens ein Metall, ausgewählt aus 3d-Übergangsmetallen und (ii) mindestens ein Element, ausgewählt aus Seltenerdelementen, umfaßt,
dadurch **gekennzeichnet**, daß der metallische Film aus einer Aluminiumlegierung besteht.

3. Doppelseitiges magnetoptisches Aufzeichnungsmedium, worin ein erstes magnetoptisches Aufzeichnungsmedium mit dem ersten Schutzfilm, dem magnetoptischen Aufzeichnungsfilm, dem zweiten Schutzfilm und dem metallischen Film in dieser Reihenfolge auf einem Substrat, wie in Anspruch 1, und ein zweites magnetoptisches Aufzeichnungsmedium mit dem ersten Schutzfilm, dem magnetoptischen Aufzeichnungsfilm, dem zweiten Schutzfilm und dem metallischen Film auf einem Substrat in dieser Reihenfolge, wie in Anspruch 1, miteinander durch eine Klebstoffschicht verbunden sind, so daß der metallische Film auf dem ersten magnetoptischen Aufzeichnungsmedium und der metallische Film auf dem zweiten magnetoptischen Aufzeichnungsmedium einander gegenüberliegen.

4. Magnetoptisches Aufzeichnungsmedium nach Anspruch 1, 2 oder 3, worin der erste Schutzfilm eine Filmdicke von 400 - 2000 Å hat, und der zweite Schutzfilm eine Filmdicke von 400 - 1000 Å.

5. Magnetoptisches Aufzeichnungsmedium nach Anspruch 1 oder 3, worin der magnetoptische Aufzeichnungsfilm aus 20 - 90 Atomprozent eines 3d-Übergangsmetalls, 5 - 30 Atomprozent eines korrosionsbeständigen Metalls und 5 - 50 Atomprozent eines Seltenerdelements besteht.

6. Magnetoptisches Aufzeichnungsmedium nach Anspruch 1 oder 2, worin das korrosionsbeständige Metall Pt und/oder Pd ist.

7. Magnetoptisches Aufzeichnungsmedium nach Anspruch 1, 2 oder 3, worin der magnetoptische Aufzeichnungsfilm eine Filmdicke von 100 - 600 Å hat.

8. Magnetoptisches Aufzeichnungsmedium nach Anspruch 1, 2 oder 3, worin der metallische Film eine Filmdicke von 100 - 5000 Å hat.

9. Magnetoptisches Aufzeichnungsmedium nach Anspruch 1, 2 oder 3, worin das Substrat aufgebaut ist aus einem statistischen Cycloolefin-Copolymer mit einer intrinsischen Viskosität [η] von 0,05 - 10 dl/g, gemessen in Decalin bei 135°C, wobei das statistische Copolymer ein Copolymer von Ethylen mit mindestens einem Cycloolefin, dargestellt durch die folgende Formel [I] oder [II], ist. 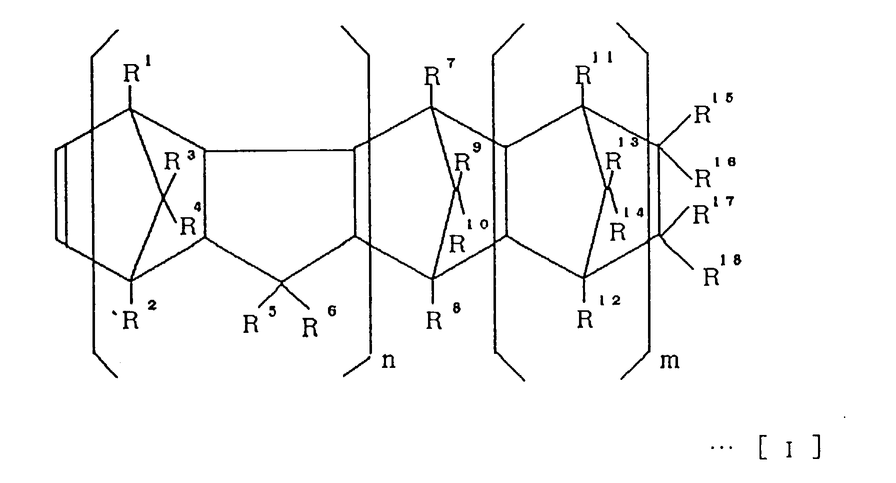 worin n gleich 0 (Null) oder 1 ist, m ist 0 (Null) oder eine positive ganze Zahl, R¹ - R¹⁸ sind jeweils Wasserstoff, Halogen oder Kohlenwasserstoffgruppen, R¹⁵ - R¹⁸ können miteinander verbunden sein und einen mono- oder polycyclischen Ring bilden, der eine Doppelbindung haben kann, und R¹⁵ kann zusammen mit R¹⁶ oder R¹⁷ zusammen mit R¹⁸ eine Alkylidengruppe bilden. 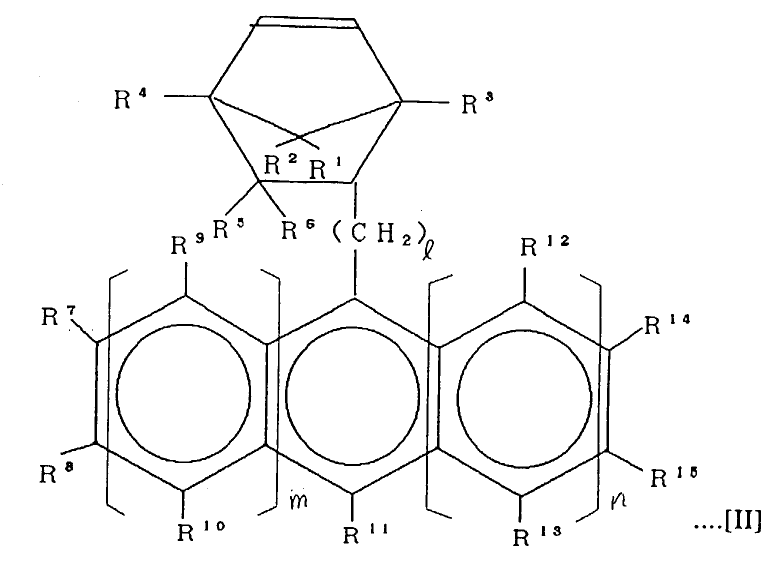 worin 1 gleich 0 (Null) oder eine ganze Zahl von mindestens 1 ist, m und n sind jeweils 0 (Null), 1 oder 2, R¹ - R¹⁵ sind jeweils ein Atom oder eine Gruppe, ausgewählt aus Wasserstoff, Halogen, aliphatischem Kohlenwasserstoff, aromatischem Kohlenwasserstoff und Alkoxy, und R⁵ (oder R⁶) und R⁹ (oder R⁷) können miteinander durch eine Alkylengruppe mit 1 - 3 Kohlenstoffatomen verbunden sein, oder können direkt ohne Mitwirkung irgendeiner anderen Gruppe verbunden sein.

10. Magnetoptisches Aufzeichnungsmedium nach Anspruch 9, worin das Substrat aufgebaut ist aus einem statistischen Cycloolefin-Copolymer [A] mit einer intrinsischen Viskosität [η], gemessen in Decalin bei 135°C, von 0,05 - 10 dl/g und einer Erweichungstemperatur (TMA) von mindestens 70°C.

11. Magnetoptisches Aufzeichnungsmedium nach Anspruch 1, 2 oder 3, worin das Substrat aufgebaut ist aus einem statistischen Cycloolefin-Copolymer [A], wie in Anspruch 10 definiert, und einem statistichen Cycloolefin-Copolymer [B] mit einer intrinsischen Viskosität [η], gemessen in Decalin bei 135°C, von 0,05 - 5 dl/g und einer Erweichungstemperatur (TMA) von weniger als 70°C, wobei das statistiche Copolymer ein Copolymer von (a) Ethylen mit (b) mindestens einem Cycloolefin, ausgewählt aus der Gruppe ungesättigter Monomere, dargestellt durch die Formeln [1] oder [2], wie in Anspruch 9 beschrieben, ist.

12. Doppelseitiges, magnetoptisches Aufzeichnungsmedium nach Anspruch 3, worin das erste magnetoptische Aufzeichnungsmedium und/oder das zweite magnetoptische Aufzeichnungsmedium zusätzlich einen Überzug auf der metallischen Schicht haben.

13. Magnetoptisches Medium nach Anspruch 1, worin das magnetoptische Aufzeichnungsmedium zusätzlich einen Überzug auf der Metallschicht hat.

## Revendications

1. Support d'enregistrement magnétooptique ayant, sur un substrat, un premier film de protection, un film d'enregistrement magnétooptique, un second film de protection et un film métallique dans cet ordre, dans lequel :
les premier et second films de protection sont constitués chacun de SiNx où x est 0 < x ≤ ⁴/3; et
le film d'enregistrement magnétooptique est constitué d'un film d'alliage amorphe qui a un axe d'aimantation aisée perpendiculaire au film et comprend (i) au moins un métal choisi parmi les métaux de transition 3d, (ii) au moins un métal choisi parmi les métaux résistant à la corrosion et (iii) au moins un élément choisi parmi les éléments des terres rares, la teneur dudit métal résistant à la corrosion étant 5-30 atomes % par rapport à tous les atomes constituant le film d'enregistrement,
caractérisé en ce que le film métallique est constitué d'un alliage d'aluminium.

2. Support d'enregistrement magnétooptique ayant, sur un substrat, un premier film de protection, un film d'enregistrement magnétooptique, un second film de protection et un film métallique dans cet ordre, dans lequel :
les premier et second films de protection sont constitués chacun de SiNx où x est 0 < x ≤ ⁴/3; et
le film d'enregistrement magnétooptique est constitué d'un film d'alliage amorphe qui a un axe d'aimantation aisée perpendiculaire au film et comprend (i) au moins un métal choisi parmi les métaux de transition 3d, et (ii) au moins un élément choisi parmi les éléments des terres rares, caractérisé en ce que :
le film métallique est composé d'un alliage d'aluminium.

3. Support d'enregistrement magnétooptique à double face, dans lequel un premier support d'enregistrement magnétooptique ayant, sur un substrat, le premier film de protection, le film d'enregistrement magnétooptique, le second film de protection et le film métallique tels que décrits en revendication 1 dans cet ordre et un second support d'enregistrement magnétooptique ayant, sur un substrat, le premier film de protection, le film d'enregistrement magnétooptique, le second film de protection et le film métallique tels que décrits en revendication 1 dans cet ordre sont réunis par l'intermédiaire d'une couche adhésive de sorte que le film métallique du premier support d'enregistrement magnétooptique et le film métallique du second support d'enregistrement magnétooptique sont en regard l'un de l'autre.

4. Support d'enregistrement magnétooptique selon la revendication 1, 2 ou 3, dans lequel le premier film de protection a une épaisseur de 400-2000 Å et le second film de protection a une épaisseur de 400-1000 Å.

5. Support d'enregistrement magnétooptique selon la revendication 1 ou 3, dans lequel le film d'enregistrement magnétooptique est constitué de 20-90 atomes % d'un métal de transition 3d, de 5-30 atomes % d'un métal résistant à la corrosion et de 5-50 atomes % d'un élément des terres rares.

6. Support d'enregistrement magnétooptique selon la revendication 1 ou 3, dans lequel le métal résistant à la corrosion est Pt et/ou Pd.

7. Support d'enregistrement magnétooptique selon la revendication 1, 2 ou 3, dans lequel le film d'enregistrement magnétooptique a une épaisseur de 100-600 Å.

8. Support d'enregistrement magnétooptique selon la revendication 1, 2 ou 3, dans lequel le film métallique a une épaisseur de 100-5000 Å.

9. Support d'enregistrement magnétooptique selon la revendication 1, 2 ou 3, dans lequel le substrat est constitué d'un copolymère statistique de cyclooléfine ayant une viscosité intrinsèque (η) de 0,5-10 dl/g mesurée .dans la décaline à 135°C, ledit copolymère statistique étant un copolymère d'éthylène et d'au moins une cyclooléfine représentée par les formules [I] ou [II] suivantes : 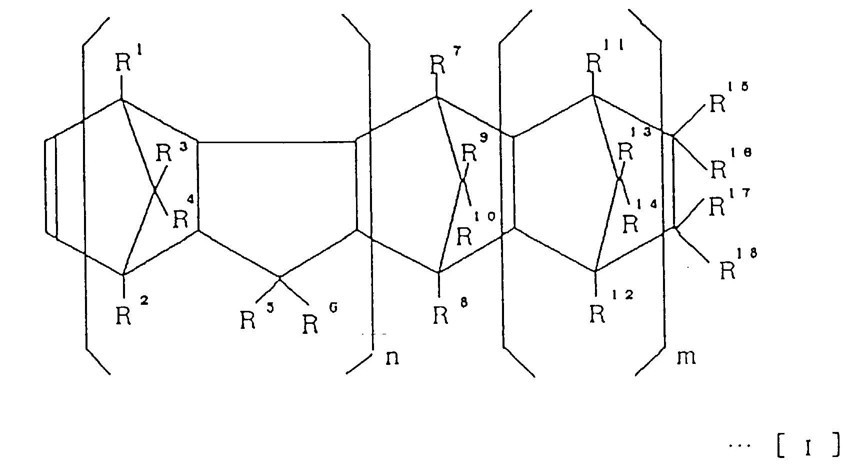 dans laquelle n est 0 (zéro) ou 1, m est 0 (zéro) ou un nombre entier positif, R¹ - R¹⁸ sont individuellement un atome d'hydrogène, un atome d'halogène ou un groupe hydrocarbure, R¹⁵ - R¹⁸ peuvent, étant liés ensemble, former un cycle mono- ou polycyclique qui peut avoir une liaison double, et R¹⁵ avec R¹⁶ ou R¹⁷ avec R¹⁸ peut former un groupe alkylidène. 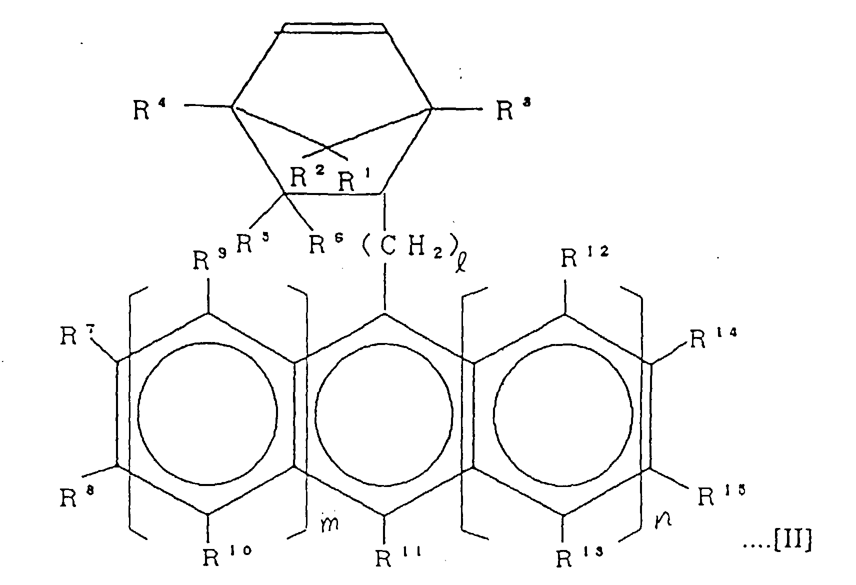 dans laquelle 1 est 0 (zéro) ou un nombre entier d'au moins 1, m et n sont chacun 0 (zéro), 1 ou 2, R¹-R¹⁵ sont individuellement un atome ou un groupe choisi dans le groupe constitué de l'hydrogène, d'un halogène, d'un hydrocarbure aliphatique, d'un hydrocarbure aromatique et d'un groupe alcoxy, et R⁵ (ou R⁶) et R⁹ (ou R⁷) peuvent être liés par l'intermédiaire d'un groupe alkylène ayant 1 à 3 atomes de carbone ou peuvent être liés directement sans passer par l'intermédiaire d'un groupe quelconque.

10. Support d'enregistrement magnétooptique selon la revendication 9, dans lequel le substrat est constitué d'un copolymère statistique de cyclooléfine [A] ayant une viscosité intrinsèque [η], mesurée dans la décaline à 135°C, de 0,05-10 dl/g et une température de ramolissement (TMA) d'au moins 70°C.

11. Support d'enregistrement magnétooptique selon la revendication 1, 2 ou 3, dans lequel le substrat est constitué d'un copolymère statistique de cyclooléfine [A] tel que défini en revendication 10, et d'un copolymère statistique de cyclooléfine [B] ayant une viscosité intrinsèque [η], mesurée dans la décaline à 135°C, de 0,05-5 dl/g et une température de ramollissement (TMA) de moins que 70°C, ledit copolymère statistique étant un copolymère de (a) éthylène et (b) au moins une cyclooléfine choisie dans le groupe constitué des monomères insaturés représentés par la formule [I] ou [II] décrite en revendication 9.

12. Support d'enregistrement magnétooptique à double face selon la revendication 3, dans lequel le premier support d'enregistrement magnétooptique et/ou le second support d'enregistrement magnétooptique comportent en outre un revêtement sur la couche métallique.

13. Support d'enregistrement magnétooptique selon la revendication 1, dans lequel le support d'enregistrement magnétooptique comporte en outre un revêtement sur la couche métallique.
